# EUROPEAN PATENT APPLICATION

(11) **EP 3 926 956 A1**
(43) Date of publication of application: **22.12.2021**
(21) Application number: 19918871.5
(22) Date of filing: 13.03.2019
(51) Int. Cl.: H04N 19/52, H04N 19/186, H04N 19/176, H04N 19/577

(54) **VIDEO PROCESSING METHOD AND DEVICE**

(71) Applicant: SZ DJI Technology Co., Ltd., Shenzhen, Guangdong 518057 (CN)
(72) Inventor: MENG, Xuewei, Beijing 100871 (CN); ZHENG, Xiaozhen, Shenzhen, Guangdong 518057 (CN); WANG, Shanshe, Beijing 100871 (CN); MA, Siwei, Beijing 100871 (CN)
(74) Representative: Appelt, Christian W.
(86) International application number: PCT/CN2019/078055
(87) International publication number: WO 2020/181543

(57) **Abstract**

A video processing method and a video processing device. The method includes: constructing a first motion information candidate list for a first image block of a current frame; selecting motion information for at least one sub-image-block included in the first image block from the first motion information candidate list respectively, where the first motion information candidate list includes at least one piece of dual motion-information; and encoding or decoding the first image block according to the motion information of the at least one sub-image-block.

## Description

### TECHNICAL FIELD

The present disclosure relates to the field of image processing technologies and, more particularly, to a video processing method and device.

### BACKGROUND

Prediction is an important module of a mainstream video encoding framework. Prediction includes intra-frame prediction and inter-frame prediction. An inter-frame prediction mode includes an advanced motion vector prediction (AMVP) mode and a merge mode.

Effective encoding or decoding in the merge mode is a problem that needs to be solved.

### SUMMARY

The present disclosure provides a video processing method and a video processing device, to achieve effective encoding and decoding in the merge mode.

In a first aspect, there is provided a video processing method. The method includes: constructing a first motion information candidate list for a first image block of a current frame; selecting motion information for at least one sub-image-block included in the first image block from the first motion information candidate list respectively, where the first motion information candidate list includes at least one piece of dual motion-information; and encoding or decoding the first image block according to the motion information of the at least one sub-image-block.

In the present disclosure, a first motion information candidate list is constructed for a first image block of a current frame; motion information for at least one sub-image-block included in the first image block is selected from the first motion information candidate list respectively, where the first motion information candidate list includes at least one piece of dual motion-information; and the first image block is encoded or decoded according to the motion information of the at least one sub-image-block. Effective encoding or decoding in the Merge mode can be achieved.

In a second aspect, there is provided a video processing method. The method includes: when constructing a first motion information candidate list for a first image block of a current frame, adjusting each piece of target dual motion-information in at least one piece of target dual motion-information included in to-be-added motion information to one piece of target single motion-information for constructing the first motion information candidate list; selecting motion information for at least one sub-image-block included in the first image block from the first motion information candidate list respectively; and encoding or decoding the first image block according to the motion information of the at least one sub-image-block.

In the present disclosure, when constructing the motion information candidate list, if the motion information added to the motion information candidate list is dual motion-information, the dual motion-information can be adjusted to one piece of single motion-information, reducing the probability of selecting the dual motion-information for the sub-image-block from the first motion information candidate list. Correspondingly, the computational complexity caused by selecting the dual motion-information from the motion information candidate list for encoding or decoding can be avoided.

In a third aspect, there is provided a video processing method. The method includes: constructing a first motion information candidate list for a first image block of a current frame; selecting motion information for at least one sub-image-block included in the first image block from the first motion information candidate list respectively; and encoding or decoding the first image block according to the motion information of the at least one sub-image-block. The first motion information candidate list and a second motion information candidate list include one or more of following same aspects: the motion information that can be added have same type, the same type of motion information that can be added have same adding order in all types of motion information, the motion information with the same type has same addition order in this type of motion information, or the same types of motion information that can be added are determined in the same manner.

In the present disclosure, the first motion information candidate list and the second motion information candidate list may include one or more of the following same aspects: the types of motion information that can be added are the same, the motion information that can be added with a same type has the same order of addition in all types of motion information, the motion information that can be added with a same type has the same order of addition in this type of motion information, or the same type of motion information that can be added is determined in the same manner. The hardware used to construct the first motion information candidate list can be at least partially compatible with the hardware used to construct the second motion information candidate list, such that the hardware structure can be simplified.

In a fourth aspect, there is provided a video processing device. The device includes: a construction unit, configured to construct a first motion information candidate list for a first image block of a current frame; a selection unit, configured to select motion information for each of the at least one sub-image-block included in the first image block from the first motion information candidate list, where the first motion information candidate list includes at least one piece of dual motion-information; and an encoding/decoding unit, configured to encode or decode the first image block based on the motion information for each of the at least one sub-image-block.

In the present disclosure, a first motion information candidate list is constructed for a first image block of a current frame; motion information for at least one sub-image-block included in the first image block is selected from the first motion information candidate list respectively, where the first motion information candidate list includes at least one piece of dual motion-information; and the first image block is encoded or decoded according to the motion information of the at least one sub-image-block. Effective encoding or decoding in the Merge mode may be achieved.

In a fifth aspect, there is provided a video processing device. The device includes: a construction unit, configured to construct a first motion information candidate list for a first image block of a current frame; an adjustment unit, configured to: when constructing a first motion information candidate list for a first image block of a current frame, adjust each piece of target dual motion-information in at least one piece of target dual motion-information included in to-be-added motion information to one piece of target single motion-information for constructing the first motion information candidate list; a selection unit, configured to select motion information for each of the at least one sub-image-block included in the first image block from the first motion information candidate list, where the first motion information candidate list includes at least one piece of dual motion-information; and an encoding/decoding unit, configured to encode or decode the first image block based on the motion information for each of the at least one sub-image-block.

In the present disclosure, when constructing the motion information candidate list, if the motion information added to the motion information candidate list is dual motion-information, the dual motion-information can be adjusted to one piece of single motion-information, reducing the probability of selecting the dual motion-information for the sub-image-block from the first motion information candidate list. Correspondingly, the computational complexity caused by selecting the dual motion-information from the motion information candidate list for encoding or decoding may be avoided.

In a sixth aspect, there is provided a video processing device. The device includes: a construction unit, configured to construct a first motion information candidate list for a first image block of a current frame, where the first motion information candidate list and a second motion information candidate list include one or more of following same aspects: the motion information that can be added have same type, the same type of motion information that can be added have same adding order in the all types of motion information, the motion information with the same type has same addition order in this type of motion information, or the same type of motion information that can be added are determined in the same manner, where the second motion information candidate list is used for selection of the motion information for the image block as a whole; a selection unit, configured to select motion information for each of the at least one sub-image-block included in the first image block from the first motion information candidate list, wherein the first motion information candidate list includes at least one piece of dual motion-information; and an encoding/decoding unit, configured to encode or decode the first image block based on the motion information for each of the at least one sub-image-block.

In the present disclosure, the first motion information candidate list and the second motion information candidate list may include one or more of the following same aspects: the types of motion information that can be added are the same, the motion information that can be added with a same type has the same order of addition in all types of motion information, the motion information that can be added with a same type has the same order of addition in this type of motion information, or the same type of motion information that can be added is determined in the same manner. The hardware used to construct the first motion information candidate list can be at least partially compatible with the hardware used to construct the second motion information candidate list, such that the hardware structure can be simplified.

In a seventh aspect, there is provided a video processing device. The device includes a processor and a memory. The memory is configured to store program codes; and the processor is configured to call the program codes to execute the method in the first aspect, the second aspect, or the third aspect.

In an eighth aspect, there is provided a computer-readable storage medium, configured to store program codes. The program codes are configured to execute a method in the first aspect, the second aspect, or the third aspect.

### BRIEF DESCRIPTION OF THE DRAWINGS

In order to more clearly explain the technical solutions of the embodiments of the present disclosure, drawings used in the description of the embodiments or the existing technologies will be briefly described below. Obviously, the drawings in the following description are only some embodiments of the present disclosure. Those of ordinary skill in the art can obtain other drawings based on the following drawings without creative work.
FIG. 1 is an architectural diagram of a technical solution consistent with an embodiment of the present disclosure.
FIG. 2 is a schematic diagram showing a video encoding process consistent with an embodiment of the present disclosure.
FIG. 3 is a schematic flow chart of a video processing method consistent with an embodiment of the present disclosure.
FIG. 4 is a schematic diagram showing a division manner of a triangular prediction process consistent with an embodiment of the present disclosure.
FIG. 5 is a schematic diagram showing MV scaling consistent with an embodiment of the present disclosure.
FIG. 6 is a schematic diagram showing an MV candidate block in the merge mode consistent with an embodiment of the present disclosure.
FIG. 7 is a schematic diagram showing pixel interpolation consistent with an embodiment of the present disclosure.
FIG. 8 is a schematic diagram of processing encoding units in a triangular prediction in existing technologies.
FIG. 9 is a schematic diagram of processing encoding units in another triangular prediction in existing technologies.
FIG. 10 is another schematic flow chart of a video processing method consistent with an embodiment of the present disclosure.
FIG. 11 is another schematic flow chart of a video processing method consistent with an embodiment of the present disclosure.
FIG. 12 is a schematic block diagram of a video processing device consistent with an embodiment of the present disclosure.

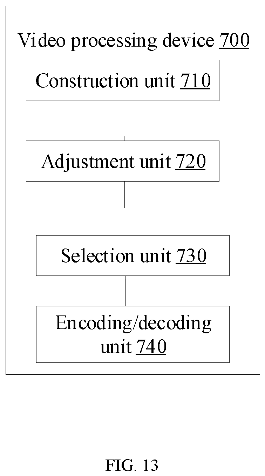

FIG. 13 is another schematic block diagram of a video processing device consistent with an embodiment of the present disclosure.

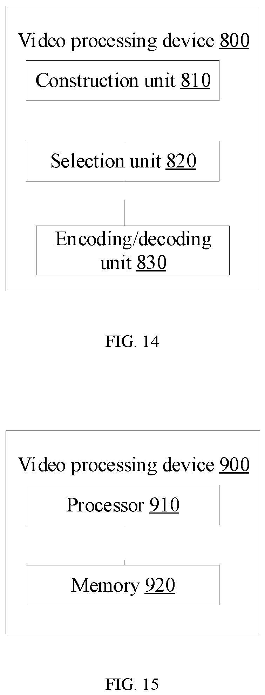

FIG. 14 is another schematic block diagram of a video processing device consistent with an embodiment of the present disclosure.
FIG. 15 is another schematic block diagram of a video processing device consistent with an embodiment of the present disclosure.

### DETAILED DESCRIPTION OF THE EMBODIMENTS

Technical solutions in the embodiments of the present disclosure will be described below in connection with the drawings in the embodiments of the present disclosure. Obviously, the described embodiments are some of the embodiments of the present disclosure, not all of the embodiments. Based on the embodiments in this disclosure, all other embodiments obtained by those of ordinary skill in the art without creative work shall fall within the scope of the present disclosure..

Unless otherwise specified, all technical and scientific terms used in the embodiments of the present disclosure have the same meaning as commonly understood by those skilled in the technical field of the present disclosure. The terms used in this disclosure are only for the purpose of describing specific embodiments and are not intended to limit the scope of the present disclosure.

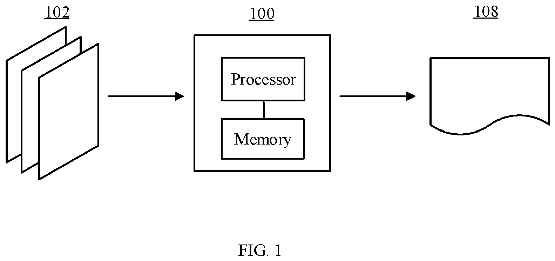

FIG. 1 is an architectural diagram of a technical solution consistent with an embodiment of the present disclosure.

As shown in FIG. 1, a system 100 receives to-be-processed data 102, and processes the to-be-processed data 102, to generate processed data 108. For example, the system 100 may receive data to be encoded and encode the data to be encoded to generate encoded data, or the system 100 may receive data to be decoded and decode the data to be decoded to generate decoded data. In some embodiments, components of the system 100 may be implemented by one or more processors. The one or more processors may be processors of a computing device or processors of a mobile device (such as an unmanned aerial vehicle). The one or more processors may be any type of processor, which is not limited in the embodiments of the present disclosure. In some embodiments, the one or more processors may include an encoder, a decoder, or a codec, etc. One or more memories may also be included in the system 100. The one or more memories can be used to store instructions or data, for example, including computer-executable instructions that implement the technical solutions of the embodiments of the present disclosure, the to-be-processed data 102, or the processed data 108, etc. The one or more memories may be any type of memory, which is not limited in the embodiments of the present disclosure.

The data to be encoded may include text, images, graphic objects, animation sequences, audio, video, or any other data that needs to be encoded. In some embodiments, the data to be encoded may include sensor data from sensors including vision sensors (for example, cameras, infrared sensors), microphones, near-field sensors (for example, ultrasonic sensors, radar), position sensors, temperature sensors, or touch sensors, etc. In some other embodiments, the data to be encoded may include information from the user, for example, biological information. The biological information may include facial features, fingerprint scans, retinal scans, voice recordings, DNA sampling, and so on.

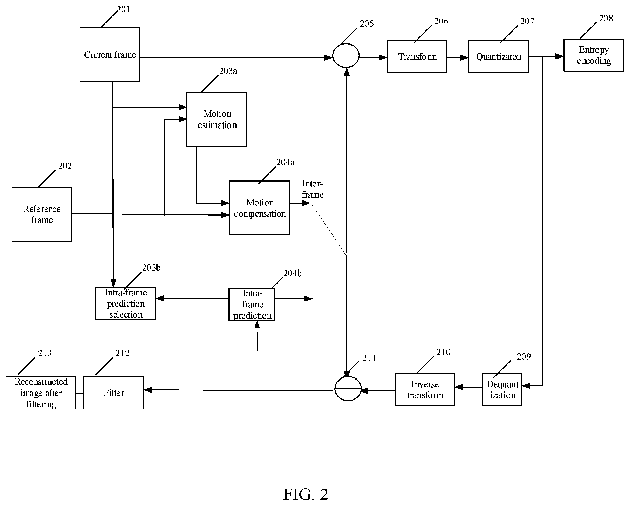

FIG. 2 is a block diagram of an encoder according to one embodiment of the present disclosure. FIG. 2 will be used to illustrate an intra-frame encoding process and an inter-frame encoding process.

As shown in FIG. 2, the inter-frame encoding and decoding process is as follows.

In 201, a current frame image is obtained. In 202, a reference frame image is obtained. In 203a, the reference frame image is used to perform motion estimation to obtain a motion vector (MV) of each image block of the current frame image. In 204a, the motion vector obtained by the motion estimation is used to perform motion compensation to obtain an estimated value of the current image block. In 205, the estimated value of the current image block is subtracted from the current image block to obtain a residual. In 206, the residual is transformed to obtain transform coefficients. In 207, the transform coefficients are quantized to obtain quantized coefficients. In 208, the quantized coefficients are subjected to entropy encoding, and finally, bit stream obtained by entropy encoding and encoding mode information after encoding are stored or sent to a decoding end. In 209, the quantized results are dequantized. In 210, the dequantization results are inversely transformed. In 211, reconstructed pixels are obtained by using the inversely transformed results and the motion compensation results. In 212, the reconstructed pixels are filtered. In 213, the reconstructed pixels after filtering are output.

As shown in FIG. 2, the intra-frame encoding and decoding process is as follows.

In 202, a current frame image is acquired. In 203b, intra-frame prediction selection is performed on the current frame image. In 204b, intra-frame prediction is performed on a current image block of the current frame. In 205, an estimated value of the current image block is subtracted from the current image block to obtain a residual. In 206, the residual of the current image block is transformed to obtain transform coefficients. In 207, the transform coefficients are quantized to obtain quantized coefficients. In 208, the quantized coefficients are subjected to entropy encoding, and finally the bit stream obtained by entropy encoding and the encoding mode information after encoding are stored or sent to a decoding end. In 209, the quantization results are dequantized. In 210, the dequantization results are inversely transformed. In 211, the inverse transform results and the intra-frame prediction results are used to obtain reconstructed pixels.

As shown in Figure 2, in the encoding process, to remove redundancy, the image can be predicted. Different images in the video can use different prediction methods. According to the prediction method adopted by the image, the image can be an intra-frame prediction image or an inter-frame prediction image. Inter-frame prediction modes may include an AMVP mode and a merge mode.

For the AMVP mode, the motion vector prediction (MVP) may be determined first. After the MVP is obtained, the starting point of the motion estimation can be determined according to the MVP. A motion search may be performed near the starting point. After the search is completed, the optimal MV may be obtained. The MV may be used to determine the position of the reference block in the reference image. The reference block may be subtracted from the current block to obtain a residual block, and the MV may be subtracted from the MVP to obtain a motion vector difference (MVD). The MVD may be transmitted to the decoder through the code stream.

For the merge mode, the MVP can be determined first, and the MVP can be directly determined as the MV. To obtain the MVP, an MVP candidate list (merged candidate list) may be established first. The MVP candidate list may include at least one candidate MVP. Each candidate MVP may correspond to an index. After selecting the MVP from the MVP candidate list, the encoder may write the index corresponding to the MVP into the code stream, and the decoder may find the MVP corresponding to the index from the MVP candidate list according to the index, to realize the decoding of the image block.

The process for encoding with the Merge mode will be described below for more clearly understanding the Merge mode.

In S1, the MVP candidate list may be obtained.

In S2, an optimal MVP may be selected from the MVP candidate list and an index of the optimal MVP in the MVP candidate list may also be obtained.

In S3, the optimal MVP may be used as the MV of the current block.

In S4, a position of the reference block (also referred to as prediction block) in the reference image may be determined according to the MV

In S5, the current block may be subtracted from the reference block to obtain the residual data.

In S6, the residual data and the index of the optimal MVP may be transmitted to the decoder.

The above process is only a specific implementation of the Merge mode, and does not limit the scope of the present disclosure. The Merge mode may be implemented in another way.

For example, a Skip mode is a special case of Merge mode. After obtaining the MV according to the Merge mode, if the encoder determines that the current block is basically same as the reference block, there is no need to transmit the residual data and only the index of the MV needs to be transmitted. Further, a flag can be transmitted, and the flag may indicate that the current block can be directly obtained from the reference block.

In other words, the feature of the Merge mode is: MV=MVP (MVD=0). The Skip mode has one more feature including: reconstruction value rec=predicted value pred (residual value resi=0).

The Merge mode can be applied to a triangular prediction method. In the triangular prediction method, a to-be-encoded image block can be divided into two triangular sub-image-blocks. The motion vector of each of the two sub-image-blocks may be determined from the motion information candidate list. And based on the motion vector of each sub-image-block of the two sub-image-blocks, a prediction sub-block corresponding to each sub-image-block can be determined, and a prediction block of the current image block may be constructed based on the prediction sub-block corresponding to each sub-image-block, to realize the encoding of the current image block.

A motion vector included in the motion vector candidate list may be a dual motion vector (a dual motion vector includes two single motion vectors). When the current image block is divided into a plurality of sub-image-blocks and the motion vectors selected for the two triangular sub-image-blocks respectively are both dual motion vectors, high computational complexity may occur. For example, when the current image block is a square image block, after the square image block is divided into two triangular sub-image-blocks, if the dual motion vector of a sub-image-block 1 includes a motion vector 1 and a motion vector 2, the dual motion vector of a sub-image-block 2 includes a motion vector 3 and a motion vector 4, then for the motion compensation process of the sub-image-block-1, it is needed to obtain the square prediction block pointed to by the motion vector 1 and the square prediction block pointed to by the motion vector 2 to obtain the final prediction of the sub-image-block 1, and for the motion compensation process of the sub-image-block 2, it is needed to obtain the square prediction block pointed to by the motion vector 3 and the square prediction block pointed to by the motion vector 4 to obtain the final prediction block of the sub-image-block 2. Then, the final prediction blocks of the sub-image-block 1 and the sub-image-block 2 are spliced to obtain a prediction block of the square image block composed of the sub-image-block 1 and the sub-image-block 2. Therefore, the entire motion compensation process of the current image block requires four prediction blocks, which brings about the problems of low bandwidth utilization and high computational complexity.

Based on this, when the current image block is divided into a plurality of sub-image-blocks, it can be expected that the motion vectors in the motion vector candidate list are all single motion vectors. Therefore, for each sub-image-block, a prediction block can be obtained separately. In the motion compensation process of the whole current image block, only two prediction blocks will be used (the two prediction blocks can be from different square prediction blocks) to avoid the above-mentioned problem of high computational complexity. For dividing the current image block into triangular-shaped sub-image-blocks, the motion vector in the motion vector candidate list can be realized as a single motion vector in the following way.

First, motion vectors of spatially adjacent blocks and temporally adjacent blocks of the current image block are used to construct a candidate list a.

The MVs of the adjacent blocks may be dual motion vectors and may need to be processed to make them single motion vectors for selection by the two triangular sub-image-blocks. The MV list obtained ultimately is assumed to be another candidate list b, the process rules could be:
1. All single MVs in the candidate list a are put in the candidate list b sequentially;
2. MVs in a dual prediction list 0 (List0) of the candidate list a are put in the candidate list b sequentially and respectively;
3. MVs in a dual prediction list 1 (List1) of the candidate list a are put in the candidate list b sequentially and respectively;
4: An average of each MV in the dual prediction list 0 and a corresponding MV in the dual prediction list 1 is put in the candidate list b respectively.

The encoding end can select an MV for each sub-image-block from the candidate list, and transmit an index value of the selected MV in the candidate list b and the triangle division manner to the decoding end, or alternatively, a combined index may be generated according to the index value of the selected MV in the candidate list b and be transmitted to the decoding end. The combined index can be further assigned a triangular division mode. It can be understood that due to the construction methods of the final motion information candidate list used in the motion compensation process could be different and correspondingly based on the different construction methods, the MV selected by the same image block can be obtained from different motion information candidate lists. Therefore, the index value corresponding to the selected MV may be determined according to the final motion information candidate list.

Of course, it can be understood that for the situation where the image block is divided into a plurality of sub-image-blocks with other shapes, the above-mentioned method can also be used to construct the final motion information candidate list for motion compensation. The above embodiment is only used as an example to illustrate a process for dividing the image block into sub-image-blocks with triangular shapes and the construction of the motion information candidate list.

However, this method of constructing the motion vector candidate list requires traversing all candidate MVs, reorganizing the dual MVs to single MVs (that is, one dual MV becomes two single MVs), and judging after the reorganization whether the reorganized MVs are duplicated. The MV that is not duplicated after the judgment needs to be added to the candidate list b. Further, two single MVs of a dual MV may be added to the candidate list b, which makes the encoding and decoding of the image block relatively complex.

It should be understood that the above embodiments can be used in but not limited to a video encoding or decoding process using triangle prediction technology, and can be adaptively applied to a video encoding and decoding process with dual motion-information in the motion information candidate list.

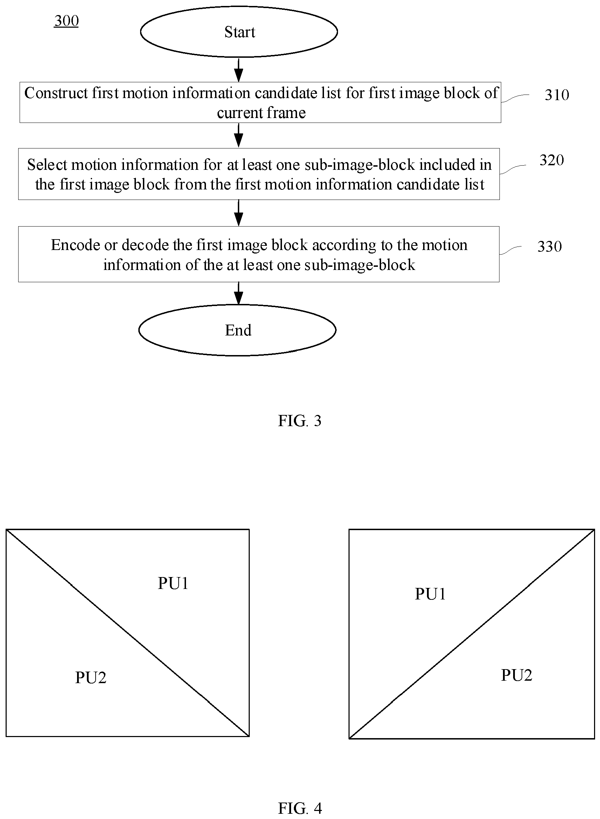

FIG. 3 is a schematic flow chart of a video processing method 300 according to one embodiment of the present disclosure. The method 300 may be achieved by a processing device. The processing device may be applied to an encoding end or a decoding end, which could be an encoder or a decoder specifically. The method 300 may include at least a portion of the following.

In 310, the processing device constructs a first motion information candidate list for a first image block of a current frame. The first motion information candidate list includes at least one piece of dual motion-information.

Optionally, when encoding an image, the image may be divided into a plurality of image blocks. For example, the image can be divided into an m×n image block array. Each image block may have a rectangular shape, a square shape, a circular shape, or any other shape. The image block can have any size, such as p×q pixels. Images with different resolutions may be encoded by first dividing the images into a plurality of small blocks. Each image block can have the same size and/or shape. Alternatively, two or more image blocks may have different sizes and/or shapes. After the image is divided into a plurality of image blocks, the image blocks in the image data can be encoded separately.

Optionally, the first motion information candidate list may include at least one piece of candidate motion information. The number of the at least one piece of candidate motion information included in the first motion information candidate list may be a preset value. For example, the processing device may sequentially add the to-be-added motion information to the motion information candidate list until the number of pieces of motion information included in the first motion information candidate list reaches a preset value.

The motion information candidate list mentioned in the embodiments of the disclosure (for example, the first motion information candidate list and the second motion information candidate list) may be a set of candidate motion information of an image block, and each piece of candidate motion information in the motion information candidate list can be stored in the same buffer or in different buffers. There is no limitation here. The index of the motion information in the motion information candidate list may be the index of the motion information in the set of candidate motion information of the current block.

For example, the set of candidate motion information includes 5 pieces of candidate motion information, and the indexes of the 5 pieces of candidate motion information in the motion information candidate list may be 0, 1, 2, 3, 4, respectively.

The motion information mentioned in the embodiments of the present disclosure may include motion vectors, or include motion vectors and reference frame information (for example, a reference frame index).

In 320, the processing device selects the motion information for at least one sub-image-block included in the first image block from the first motion information candidate list respectively.

Optionally, in one embodiment, the first image block may consist of one sub-image-block or a plurality of sub-image-blocks (for example, two sub-image-blocks). When the first image block consists of one sub-image-block, the one sub-image-block could be understood as the first image block itself.

Optionally, in one embodiment, the first image block is a quadrilateral and can be divided along the diagonal of the quadrilateral to obtain two triangular sub-image-blocks.

For example, as shown in the left graph in FIG. 4, the quadrilateral is divided from the upper left corner to the lower right corner of the quadrilateral to obtain two PUs, namely PU1 and PU2. Or, as shown in the right graph in FIG. 4, the quadrilateral can also be divided from the lower left corner to the upper right corner of the quadrilateral, to obtain two PUs, namely PU1 and PU2.

Or, when the first image block is a quadrilateral, the quadrilateral may be divided into more than two triangles, or at least two quadrilaterals, and so on.

For example, when the first image block is rectangular, the first image block can be divided into two rectangles or squares from the center of the image block in a manner parallel to one side of the first image block, or can be divided into two trapezoids from the center of the first image block in a non-parallel manner with one side of the first image block. The present disclosure has no limit on this.

For example, the first image block can be divided along the diagonal from top left to bottom right, and then the first image block can be further divided from the center of the first image block in a manner parallel to one side of the first image block, to obtain four sub-image-blocks.

It should be understood that, the previous embodiments where the first image block is a quadrilateral are used as examples to illustrate the present disclosure, and should not limit the scope of the present disclosure. In other embodiments, the first image block may be any suitable shape other than a quadrilateral.

Optionally, in the present disclosure, the division of each image block in the current frame may be based on the same division manner, for example, a triangular division manner; or it may be based on a different division manner. For example, one image block is divided by a triangular division manner, and another image block is divided by a rectangular division manner (that is, divided into multiple rectangles). For example, in another embodiment, one image block is divided by a triangular division manner and another image block is not divided. The present disclosure has no limit on this.

Optionally, in various embodiments of the present disclosure, for different image blocks, the number of sub-image-blocks included in each image block may be the same or different, which is not specifically limited in this disclosure.

The dual motion-information in the present disclosure may refer to motion information including two single motion-information. Single motion-information may be forward motion information or backward motion information. The forward motion information means that the corresponding reference frame is the forward frame of the current frame, and backward motion information means that the corresponding reference frame is the backward frame of the current frame.

The two single motion-information included in the dual motion-information may both be forward motion information, or both may be backward motion information, or may be one forward motion information and one backward motion information, which is not specifically limited in the present disclosure.

In 330, the first image block is encoded or decoded according to the motion information of the at least one sub-image-block.

In one embodiment, when the first motion information candidate list is constructed, the dual motion-information may be included. As described before, when the motion information of the sub-image-block is dual motion-information, the subsequent encoding/decoding process may be highly complex. When the dual motion-information is selected during selecting the motion information for the sub-image-blocks of the first image block, the first dual motion-information may be processed according to a preset rule for encoding/decoding the first image block.

In one embodiment, the processing device may adjust the dual motion-information to one piece of single motion-information and use the single motion-information to encode or decode the first image block.

Optionally, in one embodiment, the first image block may be composed of one sub-image-block, and the image block pointed to by the motion information of the sub-image-block may be used as the prediction block of the first image block. Based on the combination of the prediction block and the first image block, the residual data may be obtained and written into the code stream.

Correspondingly, for the decoding end, the residual data can be obtained from the decoded bitstream, and the image block pointed to by the motion information of the sub-image-block can be used as the prediction block of the first image block. Correspondingly, based on the residual data and the prediction block, the current first image block may be decoded.

In one embodiment, the first image block may consist of a plurality of sub-image-blocks and each sub-image-block may correspond to a prediction sub-block. A plurality of prediction sub-blocks corresponding to the plurality of sub-image-blocks may form a prediction block. A position of each prediction sub-block in the prediction block may correspond to a position of a corresponding sub-image-block in the first image block. Based on the combination of the prediction block and the first image block, the residual data may be obtained and written into the code stream.

Correspondingly, for the decoding end, the residual data can be obtained from the decoded bitstream, and the plurality of prediction sub-blocks pointed to by the motion information of the plurality of sub-image-blocks can be used to form the prediction block of the first image block. Correspondingly, based on the residual data and the prediction block, the current first image block may be decoded.

Optionally, in one embodiment, for the encoding end, the index of the motion information selected for each sub-image-block from the first motion information candidate list can be written into the encoding bitstream respectively. Specifically, the index of the motion information may be an index in the motion information candidate list. And further, the encoding end may also write the division mode of the first image block into the encoding bitstream.

For the decoding end, it is possible to decode the code stream, obtain the index of the motion information corresponding to each sub-image-block, and select the motion information for each sub-image-block from the first motion information candidate list according to the index of the motion information. When the selected motion information is the first dual motion-information, the first dual motion-information may need to be adjusted to the first single motion-information. And further, the decoding end may also obtain the division mode of the first image block from the decoded bitstream, and based on the division mode of the first image block, compose a prediction block from the prediction sub-blocks corresponding to each sub-image-block.

Or, in another embodiment, the encoding end may obtain a value (that is, a value of the combined index) according to the index of the motion information selected for each sub-image-block from the first motion information candidate list, and the value may be transmitted to the decoding end. That is, the index of the motion information of the plurality of sub-image-blocks may be represented by a value. Optionally, the value may be further given the meaning of the division mode of the sub-image-blocks.

The encoding end may select the value from the list of values according to the index of the motion information of each sub-image-block and the division mode of the sub-image-blocks.

For example, in one embodiment, there are 5 candidate motion vectors in the motion vector candidate list, and the division mode for dividing the current CU into triangles can be division from the upper left corner to the lower right corner (that is, the division direction of 135 degrees), and division from the lower left to the upper right (that is, the division direction of 45 degrees). After the current CU is divided, two PUs, namely PU0 and PU1, can be obtained.

For the division direction from the upper left to the lower right, that is, the division direction of 135 degrees, if PU0 uses a candidate motion vector with index 1, and PU1 uses a candidate motion vector with index 0, the combined index has a value of 0;
for the division direction from the bottom left to the top right, that is, the division direction of 45 degrees, if PU0 uses a candidate motion vector with index 0, and PU1 uses a candidate motion vector with index 1, the value of the index of the combination is 1;
for the division direction from the bottom left to the upper right, that is, the division direction of 45 degrees, if PU0 uses the candidate motion vector with index 0 and PU1 uses the candidate motion vector with index 2, the value of the index of the combination is 2;
for the division direction from the upper left to the lower right, that is, the division direction of 135 degrees, if PU0 uses a candidate motion vector with index 0 and PU1 uses a candidate motion vector with index 1, the combined index has a value of 3;
correspondingly, the combined index can be a value from 0 to 39. This is because there are 5 candidate motion vectors. If each PU can select any of the 5 candidate motion vectors, then two PUs will select candidate motions. The vector selection methods can be 5x5=25. If you need to avoid PU1 and PU2 from selecting the same motion vector, you need to subtract the 25 selection methods from the five cases where PU0 and PU1 use the same MV, that is, 20 selection methods. Considering two different triangle division directions, there are 40 cases, that is, the combined index can be a value from 0 to 39.

The first dual motion-information mentioned in the embodiments of the present disclosure may be any dual motion-information. That is, as long as the dual motion-information is selected for the sub-image-block from the first motion information candidate list, the dual motion-information needs to be adjusted to one piece of single motion-information.

Alternatively, the first dual motion-information may be specific dual motion-information. That is, only when the motion information selected for the sub-image-block from the first motion information candidate list is specific dual motion-information, the dual motion-information needs to be adjusted to single motion-information.

Optionally, in one embodiment, for the dual motion-information selected for any sub-image-block, the adjustment from dual motion-information to single motion-information may be performed.

Alternatively, only for the dual motion-information selected for a specific sub-image-block, the adjustment from the dual motion-information to the single motion-information may be performed.

Optionally, in one embodiment of the present disclosure, for the dual motion-information selected for the sub-image-blocks of any image block, the adjustment from the dual motion-information to the single motion-information may be performed.

Alternatively, only for the dual motion-information selected for the sub-image-blocks of one specific image block, the adjustment from the dual motion-information to the single motion-information may be performed.

In the present disclosure, various methods may be used to adjust the first dual motion-information to one piece of single motion-information.

In one embodiment, the processing device may select one piece of single motion-information from the first dual motion-information as the first single motion-information.

One piece of single motion-information included in one piece of dual motion-information may belong to one list (that is, the first list in the present disclosure), and another single motion-information included in the dual motion-information may belong to another list (that is, the second list in the present disclosure).

The first list in the present embodiment of the present disclosure may be the aforementioned list 0, and the second list may be the aforementioned list 1. Both the list 0 and the list 1 may contain the motion information corresponding to the reference image block that has been encoded forward or backward. Of course, in other embodiments, the first list and the second list may not be the list 0 and the list 1. The first list and the second list may schematically indicate that two single motion-information in one piece of dual motion-information can come from the first list or the second list. Also, the first list and the second list can be lists designed according to other logic or methods, etc., which can be stored in a buffer, or can be lists in a logical sense.

For example, as shown in Table 1, the current image block (numbered 100) includes three forward reference image blocks and three backward reference image blocks, that is, a total of six reference image blocks. The six reference image blocks are numbered in the order of natural images (that is, the natural number) as 97, 98, 99, 100, 101, 102, 103. The indexes of these reference image blocks in the list 0 and the list 1 are different. In the list 0, one reference image block closest to the front of the current reference image block is marked as index 0, and the previous reference image block is index 1. The forward reference image blocks are followed by the backward reference image blocks in order. Correspondingly, the indices of the image blocks 97, 98, 99, 100, 101, 102, 103 can be 2, 1, 0, 3, 4, 5. In the list 1, the reference image block closest to the back of the current reference image block is marked with index 0, and the next reference image block is index 1. After the backward reference image blocks are arranged, the forward reference image blocks are ranked 97 and 98. The indexes of the image blocks 99, 100, 101, 102, and 103 can be 5, 4, 3, 0, 1, 2 in order.

**Table 1**

| Natural Index | 97 | 98 | 99 | 100 | 101 | 102 | 103 |
|---|---|---|---|---|---|---|---|
| Index in list 0 | 2 | 1 | 0 | | 3 | 4 | 5 |
| Index in list 1 | 5 | 4 | 3 | | 0 | 1 | 2 |

Optionally, the processing device may select one piece of motion information from the first dual motion-information as the first single motion-information according to a preset rule. The preset rule is used to instruct to select one piece of single motion-information set in a specific list from the first dual motion-information, and the specific list is the second list or the first list.

Specifically, the preset rule may be preset on the processing device, and the preset rule may indicate whether to select the single motion-information belonging to the first list or to select the single motion-information belonging to the second list, such that the processing device can select the single motion-information from the first dual motion-information based on the present rule.

Alternatively, in some other embodiments, an algorithm may be used to select one piece of motion information from the first dual motion-information as the first single motion-information.

For example, the two prediction sub-blocks corresponding to the two single motion-information in the first dual motion-information may be matched with the current sub-image-block respectively, and the single motion-information corresponding to the prediction sub-block corresponding to the better matching result may be selected as the first single motion-information.

Optionally, in some embodiments, the selection method for selecting the first single motion-information from the first dual motion-information may be updatable.

Specifically, for different image blocks, the selection methods for selecting the single motion-information for the sub-image-blocks included therein may be different.

For example, for one previous image block of the current image block, the aforementioned preset rule may be used to select the single motion-information of each sub-image-block included. For the current image block, the aforementioned algorithm may be used to select the single motion-information for each sub-image-block included.

In some embodiments, for different sub-image-blocks of the same image block, the selection methods for selecting the single-motion information from the dual-motion information may be different.

For example, for the previous sub-image-block of the current sub-image-block (the previous sub-image-block and the current sub-image-block belong to the same image block), the single-motion information may be selected using the preset rules mentioned above. For the current sub-image-block, the single motion-information may be selected using the above-mentioned algorithm.

In some other embodiments, the selection methods of the single-motion information for different image blocks or different sub-image-blocks may be the same.

In one embodiment, when one piece of first single motion-information is selected from the first dual motion-information, the encoding end may write the first identifier of the first single motion-information into the encoded code stream.

Correspondingly, for the decoding end, the first identifier of the first single motion-information can be obtained from the decoded code stream, such that according to the first identifier, single motion-information can be selected from the first dual motion-information as the first single motion-information.

For example, the single motion-information included in the first dual-motion information may have identifiers 0 and 1, respectively. When the encoding end selects the single motion-information with the identifier 0 as the first single motion-information, the identifier 0 can be written to the code stream. And the decoding end can obtain the identifier 0 from the decoded code stream, such that the decoding end can determine the motion information with the identified 0 in the first dual motion-information as the first single motion-information.

When the encoding end writes the first identifier into the encoding code stream, the encoding end may select the first single motion-information based on an algorithm. And then for the decoding end, it is not needed to use the algorithm to implement the selection of the first single motion-information from the first double motion information again.

When the encoding end selects the first single motion-information from the first dual motion-information through the above-mentioned preset rule, the decoding end can also select the first single motion-information from the first dual motion-information through the same preset rule.

Of course, even if the encoding end selects the first single motion-information from the first dual motion-information through the aforementioned preset rules, the encoding end can still write the identifier of the first single motion-information into the encoding code stream, such that the decoding end can select one piece of single motion-information from the first dual motion-information as the first single motion-information according to the first identifier.

In one embodiment, one piece of single motion-information may be selected from the first dual motion-information as the first single motion-information. In some other embodiments, the first dual motion-information may be merged to form the first single motion-information.

In one embodiment, the two pieces of motion information included in the dual motion-information may belong to different reference frames. Before the first dual motion-information is merged, one motion information in the first dual motion-information may be scaled based on another motion information in the first dual motion-information. The reference frame of the motion information after the merging process may be the reference frame pointed to by the another motion information.

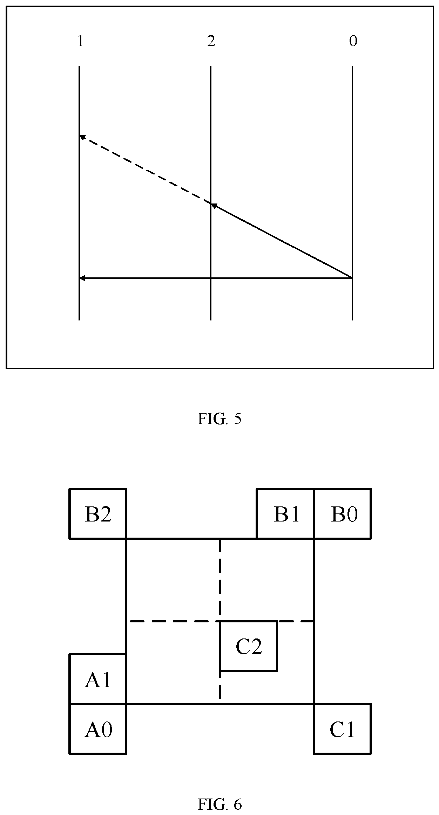

For example, the specific scaling process can be shown in FIG. 5. Frame 0 represents the current frame, frame 1 represents the reference frame pointed to by motion information 1 (may be MV1), and frame 2 represents another motion information 2 (may be MV2) pointed to. For the reference frame, image sub-block 0 represents the current sub-image-block, image sub-block 1 represents the prediction sub-block 1 pointed to by motion information 1, and image sub-block 2 represents the prediction sub-block 2 pointed to by another motion information 2. When scaling is performed to the motion information 1 based on the motion information 2, the motion information 1 is scaled to the position of the dotted line.

When the motion information is MV, the scaled MV1=pre-scaled MV1*a/b, where a is the time domain distance between frame 2 and frame 0, and b is the time domain distance between frame 1 and frame 0.

In various embodiments, the merging process may be a weighting process or an averaging process.

In one embodiment, the merging process may be the weighting process. Correspondingly, the processing device may determine the weight of each of motion information in the first dual motion-information, to perform the weighting process on the motion information in the first dual motion-information based on the weight.

The influencing factor of the weight of each of motion information in the first dual motion-information may include at least one of the following: the size of the first image block, the pixel value of the first image block, the pixel value of the adjacent area of the first image block, the size and/or quantity of the motion information belonging to the first list in the added motion information of the first motion information candidate list, or the size and/or quantity of the motion information belonging to the second list in the added motion information of the first motion information candidate list.

In one embodiment, the size of the first image block may include the width and height of the first image block, and the processing device may determine the weight of each piece of motion information in the first dual motion-information according to the width and height of the first image block. Specifically, the weight of each piece of motion information can be determined according to the absolute value of the width and the height, and/or the ratio between the width and the height.

For example, when the width and height of the first image block are both greater than 32 pixels, a ratio between the weight of the motion information belonging to the list 0 in the first dual motion-information and the weight of the motion information belonging to the motion list 1 in the first dual motion-information may be 2:1. When the width and height of the first image block are both greater than 16 pixels and less than or equal to 32 pixels, a ratio between the weight of the motion information belonging to list 0 in the first dual motion-information and the weight of the motion information belonging to motion list 1 in the first dual motion-information may be 1:1. For other cases, a ratio between the weight of the motion information belonging to the list 0 in the first pair of motion information and the weight of the motion information belonging to the motion list 1 in the first pair of motion information may be 1:2.

For example, a ratio between the weight of the motion information belonging to the list 0 in the first pair of motion information and the weight of the motion information belonging to the motion list 1 in the first pair of motion information may be equal to a ratio between the width of the first image block and the height of the first image block.

In another embodiment, the processing device may calculate first-degree gradient or second-degree gradient in one direction of the horizontal, vertical, 45 degree (45 degrees from the horizontal direction), and 135 degree (135 degrees from the horizontal direction) directions in the first image block and/or its neighboring areas based on the pixel values of the first image block and/or its adjacent areas. The texture direction may be determined according to the gradient direction. Then, a higher weight may be assigned to the motion information (single MV) that is closer to this texture direction in the first dual motion-information (for example, dual MV). Specifically, the adjacent area of the first image block mentioned here may be an area around the first image block (adjacent to the first image block and/or a preset area between the first image block). For example, when the first image block is a quadrilateral, the adjacent area may be at least one surrounding area, and the size of the adjacent area may be preset on the processing device, or may be obtained by other means.

In another embodiment, the processing device may determine the weight of each piece of motion information included in the dual motion-information according to the ratio between the number of pieces of motion information belonging to the first list in the added motion information of the first motion information candidate list and the number of pieces of motion information belonging to the second list in the added motion information of the first motion information candidate list.

For example, a ratio between the number of MVs added into the first motion information candidate list and with motion information belonging to list 0 and the number of MVs added into the first motion information candidate list and with motion information belonging to list 1 may be equal to a ratio between the weight of the motion information in the first dual motion-information that belongs to the list 0 and the weight of the motion information in the first dual motion-information that belongs to the list 1.

For description purposes only, the previous embodiments with various methods for adjusting the first dual motion-information to one piece of first single motion-information are used as examples to illustrate the present disclosure, and should not limit the scope of the present disclosure. In various embodiments of the present disclosure, any suitable methods may be used for adjusting the first dual motion-information to one piece of first single motion-information. And which method is used for adjusting the first dual motion-information to one piece of first single motion-information may be preset in the processing device.

For example, in one embodiment, a method that selects one piece of single motion-information from the first dual motion-information may be preset in the processing device for adjusting one piece of dual motion-information to one piece of single motion-information.

Specifically, whether a mode that uses a preset rule to select one piece of single motion-information from the first dual motion-information or a mode that uses an algorithm to select one piece of single motion-information from the first dual motion-information may be preset in the processing device or may be determined from other manners.

For example, in some other embodiments, a method that merges the first dual motion-information to one piece of single motion-information may be preset in the processing device for adjusting one piece of dual motion-information to one piece of single motion-information.

Specifically, whether a weighting process or an averaging process is used may be preset in the processing device or may be determined from other manners.

For example, in some other embodiments, a process that averages the first dual motion-information to one piece of single motion-information may be preset in the processing device for adjusting one piece of dual motion-information to one piece of single motion-information.

Specifically, when the averaging process is used, whether the motion information belonging to the list 0 is scaled based on the list 1 or the motion information belonging to the list 1 is scaled based on the list 0 may be preset in the processing device or may be determined from other manners.

For example, in some other embodiments, a process that performs the weighting process on the first dual motion-information to form one piece of single motion-information may be preset in the processing device for adjusting one piece of dual motion-information to one piece of single motion-information.

Specifically, when the weighting process is used, whether the motion information belonging to the list 0 is scaled based on the list 1 or the motion information belonging to the list 1 is scaled based on the list 0 may be preset in the processing device or may be determined from other manners.

In some other embodiments, a first adjustment method for adjusting the first dual motion-information to the first single motion-information may be selected from a plurality of first methods according to factors including: the size of the first image block, the pixel values of the first image block, the pixel values of regions adjacent to the first image block, a size and/or number of pieces of motion information belonging to the first list of the motion information that has been added into the first motion information candidate list, or a size and/or number of pieces of motion information belonging to the first list of the motion information that has been added into the first motion information candidate list.

The plurality of first methods may include at least one of the following:
1a) determining the motion information in the first dual motion-information belonging to the first list as the first single motion-information;
2a) determining the motion information in the first dual motion-information belonging to the second list as the first single motion-information;
3a) scaling the motion information in the first dual motion-information belonging to the first list based on the motion information belonging to the second list, and performing weighting process on the motion information belonging to the second list and the scaled motion information belonging to the first list, to obtain the first single motion-information;
4a) scaling the motion information in the first dual motion-information belonging to the second list based on the motion information belonging to the first list, and performing weighting process on the motion information belonging to the first list and the scaled motion information belonging to the second list, to obtain the first single motion-information;
5a) scaling the motion information in the first dual motion-information belonging to the first list based on the motion information belonging to the second list, and performing an averaging process on the motion information belonging to the second list and the scaled motion information belonging to the first list, to obtain the first single motion-information;
6a) scaling the motion information in the first dual motion-information belonging to the second list based on the motion information belonging to the first list, and performing an averaging process on the motion information belonging to the first list and the scaled motion information belonging to the second list, to obtain the first single motion-information.

In one embodiment, the size of the first image block may include the width and height of the first image block, and the processing device may determine which of the above methods 1a)-6a) to be used according to the width and height of the first image block. Specifically, the absolute value of width and height, and/or the ratio between width and height, can be used to determine which of the above methods 1a)-6a) is to be used.

For example, when the width and the height of the first image block are both larger than 32 pixels, the method 1a) may be used; when the width and the height of the first image block are both smaller than or equal to 16 pixels, the method 2a) may be used; in other conditions, methods 3a) to 6a) may be used.

For example, when the ratio between the width of the first image block and the height of the first image block is larger than 1, the method 1a) may be used; when the ratio between the width of the first image block and the height of the first image block is smaller than 1, the method 1a) may be used; when the ratio between the width of the first image block and the height of the first image block is equal to 1, the methods 3a) to 6a) may be used.

In some other embodiments, the processing device may calculate first-degree gradient or second-degree gradient in at least one direction of the horizontal, vertical, 45 degree, or 135 degree direction of the first image block and/or its neighboring areas based on the pixel values of the first image block and/or its adjacent areas. The texture direction may be determined according to the gradient direction. When the texture direction is closer to the motion information in the first dual motion-information that belongs to the first list, the method 1a) may be used. When the texture direction is closer to the motion information in the first dual motion-information that belongs to the second list, the method 2a) may be used.

In some other embodiments, the processing device may determine the weight of each piece of motion information in the first dual motion-information according to a ratio between the number of pieces of motion information belonging to the first list of the motion information that has been added into the first motion information candidate list and the number of pieces of motion information belonging to the second list of the motion information that has been added into the first motion information candidate list.

For example, when the number of pieces of motion information belonging to the first list of the motion information that has been added into the first motion information candidate list is larger, the method 1a) may be used. When the number of pieces of motion information belonging to the first list of the motion information that has been added into the first motion information candidate list is smaller, the method 2a) may be used. When the number of pieces of motion information belonging to the first list of the motion information that has been added into the first motion information candidate list is same as the number of pieces of motion information belonging to the second list of the motion information that has been added into the first motion information candidate list, the methods 3a) to 6a) may be used.

In some embodiments, the plurality of first methods may include at least one of the following:
1A) selecting one piece of single motion-information from the first dual motion-information as the first single motion-information;
1B) performing a merging process on the first dual motion-information to obtain the first single motion-information.

When the method 1A) is selected as the first adjustment method, the implementation of selecting one piece of single motion-information from the first dual motion-information as the first single motion-information may be preset in the processing device or may be determined according to other factors.

When the method 1B) is selected as the first adjustment method, the implementation of performing the merging process on the first dual motion-information may be preset in the processing device or may be determined according to other factors.

It should be understood that the method 1A) and/or the method 1B) may include a plurality of implementation methods respectively. For example, the method 1A) may include the method 1a) to the method 2a) described above with respect to the first dual motion-information, and the method 1B) may include the method 3a) to the method 6a) described above with respect to the first dual motion-information. When the processing device selects the method 1A) and/or the method 1B), it should be understood as that the detailed implementation methods included in the method 1A) and/or the method 1B) are selected.

Optionally, in one embodiment of the present disclosure, for different image blocks of the current frame, a same method in the above-mentioned plurality of first methods may be used to realize the adjustment from the dual motion-information to the single motion-information. Or, for different image blocks of the current frame, a same method in the plurality of first methods can be used to realize the adjustment from the dual motion-information to the single motion-information.

Optionally, in one embodiment of the present disclosure, for different sub-image-blocks of the current image block, a same method in the above-mentioned plurality of first methods may be used to realize the adjustment from the dual motion-information to the single motion-information. Or, for different sub-image-blocks of the current image block, a same method in the plurality of first methods can be used to realize the adjustment from the dual motion-information to the single motion-information.

In the present disclosure, the motion information for the sub-image-blocks included in the current image block may be selected from the motion information candidate list (which can be a motion vector candidate list, for example, the above-mentioned candidate list a). When the selected motion information is the dual motion-information, the dual motion-information can be adjusted to the single motion-information, and the current image block may be encoded or decoded based on the adjusted single motion-information, to avoid the problem of computational complexity caused by selecting the dual motion-information from the motion information candidate list for encoding or decoding. Also, traversing all MVs when constructing the motion information candidate list, and recombining the double MV from double MV to single MV, and the problem of high complexity caused by determining whether the recombined MV is duplicated, may also be avoided, and the complexity of encoding and decoding may be reduced.

The above embodiments are used to illustrate the adjustment of the first dual motion-information to one piece of single motion-information when the motion information selected for the sub-image-blocks are the first dual motion-information, and do not limit the scope of the present disclosure. The methods for processing the first dual motion-information according to the preset rule are not limited to the above illustration.

In one embodiment, the first dual motion-information may include the first target dual motion-information. The first target dual motion-information can be regular or ordinary dual motion-information, may be a certain type or a specific first dual motion-information, or may be special dual motion-information in the first dual motion-information. When the motion information selected for the sub-image-blocks is the first target dual motion-information, the precision of the motion vectors included in the first target dual motion-information may also be adjusted.

In some other embodiments, before selecting the motion information for the sub-image-blocks, the precision of at least one motion vector included in the first target dual motion-information in the first motion information candidate list may be adjusted; or when constructing the first motion information candidate list, the precision of the at least one motion vector included in the first target dual motion-information may be adjusted. That is, the precision of the at least one motion vector value corresponding to at least part of the motion information in the first motion information candidate list may be obtained by conversion.

In some embodiments, the adjustment of the precision the motion vector can be understood as adjusting the value of the motion vector to the value of the motion vector of an image block pointing to the whole pixel, or can also be understood as adjusting the image block pointed to by the value of the motion vector to an image block of the whole pixel.

How to adjust the precision of the dual motion vector will be described below. The precision adjustment described below can be used to perform precision adjustment on the value of the at least one motion vector included in the first dual motion-information selected from the first motion information candidate list, or may be used to perform precision adjustment on the at least one motion vector in the dual to-be-added motion information when constructing the first motion information candidate list, or may be used to perform precision adjustment on the at least one motion vector of the at least one piece of dual motion-information in the first motion information candidate list before selecting the motion information for the sub-image-blocks.

In the process of motion estimation, because of the continuity of natural object motion, the motion vector of the object between two adjacent frames may not be exactly an integer number of pixels. To improve the precision of the motion vector, the motion vector with 1/4 pixel precision may be used for the motion estimation of luminance components in HEVC. However, there are no sample values at fractional pixels in digital video. Generally speaking, to achieve 1/K pixel precision estimation, the values of these fractional pixels must be approximately interpolated. That is, K-fold interpolation may be performed in the column direction and the row direction of the reference frame image, and search may be performed in the image after interpolation. In the process of interpolating the first image block, the pixels in the first image block and the pixels in the adjacent area may need to be used.

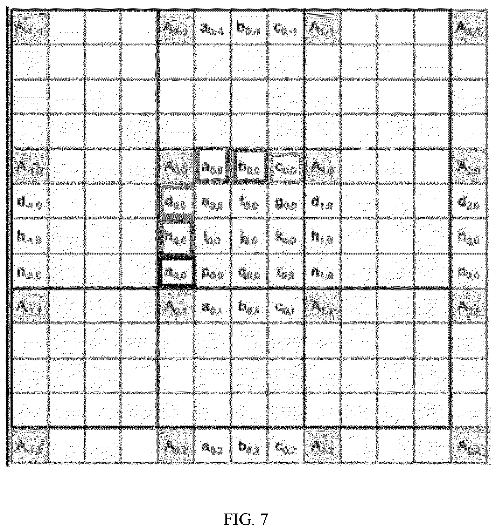

In the process of 1/4 pixel interpolation, for an image block of 8×8/4×8/4×4/8×4 size, 3 points on the left side and 4 points on the right side of the outside of the block will be used to generate the pixel value of the interpolation points. As shown in FIG. 7 which is a schematic diagram showing a pixel interpolation provided in an embodiment of the present disclosure, ao,o and do,o are 1/4 pixels, bo,o and ho,o are half pixels, and co,o and no,o are 3/4 pixels. Assuming that the current image block is a 2×2 block surrounded by 2×2 blocks A_{0,0}∼A_{1,0}, A_{0,0}∼A_{0,1}, to calculate all the interpolation points in this 2×2 image block, some points outside the 2×2 block, including 3 on the left, 4 on the right, 3 on the top, and 4 on the bottom, may need to be used.

In one embodiment, the processing device may determine whether the size of the first image block satisfies the first condition when adjusting the precision of the motion vector value according to the size of the first image block. When the size of the first image block satisfies the first condition, the value of the at least one dual motion vector value included in the at least one piece of dual motion-information in the first motion information candidate list of the first image block may be converted into an integer pixel precision. It should be understood that in practical applications, the precision of the corresponding motion vector value can also be directly converted without depending on the size of the first image block, or the precision of the corresponding motion vector value can also be adjusted according to other conditions.

In some embodiments, the first condition may include: the first motion information candidate list of the first image block includes dual motion-information, and the size of the first image block meets a preset range threshold. In some embodiments, the preset range threshold may include: the size of the first image block is greater than or equal to 64 pixels; or, in some other embodiments, the preset range threshold may include the size of the first image block is greater than 16 pixels and less than 64 pixels. In other embodiments, the preset range threshold may also include other range values, which are not specifically limited in the embodiments of the present disclosure.

For example, the first image block may be a coding unit CU, and the size of the coding unit CU may be 8×8. Correspondingly, the size of the coding unit CU is 8×8 being equal to 64. When it is detected that the first motion information candidate list of the first image block includes the dual motion-information, the processing device may adjust the precision of the value of the dual motion vector included in all the dual motion-information in the first motion information candidate list (the value of the dual motion vector can be referred to as the bi-predicted motion vector value). The precision of the dual motion vector value included in all the dual-motion information can be adjusted to integer pixel precision. It should be understood that when a plurality of first dual motion-information is included in the first motion information candidate list, only the precision of at least one motion vector value included in part of the dual motion-information in the first dual motion-information, for example, double motion information for the first target, may be adjusted.

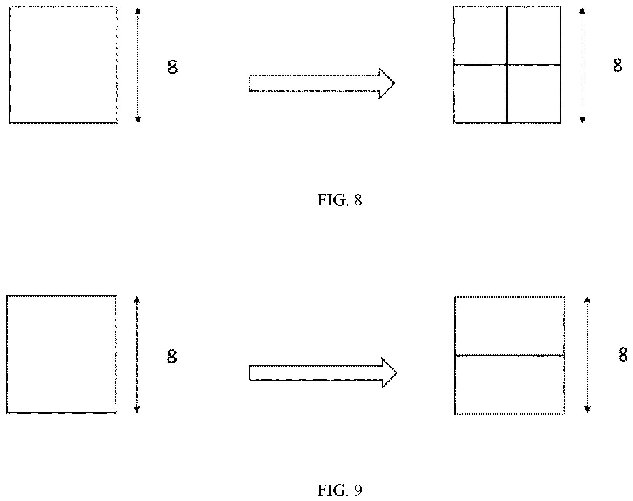

When the existing triangle prediction mode is adopted, the current triangle prediction is only for CUs with W×H≥64 (where W represents the pixel width of the CU, H represents the pixel height of the CU). The existing triangle prediction is only used for CUs with W×H≥64 also because of bandwidth consumption. Taking FIG. 8 as an example, FIG. 8 is a schematic diagram of a processing encoding unit for triangular prediction provided by the existing technologies. It is assumed that the worst case of HEVC (1/4 pixel precision MV) is an 8×8 bidirectional inter-frame prediction CU and the number of the reference pixel points are (8+7)*(8+7)x2=450. Versatile video coding (VVC) triangle prediction may set the minimum processing CU to 4x4. For the 4x4 bidirectional inter-frame prediction CU in the worst case (1/4 pixel precision MV), the number of reference pixels is (4+7)*(4+7)*2*4=968. Compared with HEVC, VVC has increased by 115%, causing greater bandwidth pressure. For another example, if the minimum processed CU for triangle prediction is set to 4×8 or 8×4, the worst case of HEVC (1/4 pixel precision MV) is a bidirectional inter prediction CU of 8×8, and the number of the reference pixels is (8+7)*(8+7)×2=450. For VVC triangle prediction, if the minimum processing CU is set to 4×8/8×4, for the 4×8/8×4 bidirectional inter-frame prediction CU under the worst case (1/4 pixel precision MV), the number of reference pixels is (8+7)*(4+7)*2*4=660. Compared with HEVC, VVC has increased by 47%, which also causes greater bandwidth pressure.

Therefore, in the present disclosure, the bi-prediction may be performed using the triangular prediction mode, and at least one motion vector value included in the dual motion-information may be converted to integer pixel precision, which reduces bandwidth pressure and improves bandwidth utilization.

In one embodiment, if the processing device determines that the first image block does not satisfy the first condition, it may convert all the motion vector values in the first motion information candidate list of the first image block into integer pixel precision.

For example, in one embodiment, the first image block is a coding unit CU, and the size of the coding unit CU is 4×8. Therefore, the size of the coding unit CU, 4×8, is equal to 32, and 32 is less than 64. Correspondingly, the processing device converts all motion vector values in the first motion information candidate list into integer pixel precision.

In the present disclosure, by adjusting all the motion vector values in the motion information candidate list of the first image block that does not meet the first condition into integer pixel precision, it can avoid the limit that the existing triangle prediction mode is only used for image blocks larger than or equal to 64 pixels, and improve the performance of video encoding and decoding.

In one embodiment, the motion vector value may include a horizontal component and a vertical component. The processing device may obtain the horizontal component and the vertical component of the motion vector value included in the first motion information candidate list of the first image block when adjusting the precision of the motion vector value, and adjusting the horizontal component and the vertical component of the motion vector value o integer pixel precision.

In one embodiment, when the processing device converts the horizontal component and the vertical component of the motion vector value into integer pixel precision, it may determine the conversion coefficients s according to the storage precision of the motion vector value, and use the first preset conversion rule and the conversion coefficient s to convert the horizontal component of the predicted value of the motion vector into an integer pixel precision; and use the second preset conversion rule and the conversion coefficient s to convert the vertical component of the motion vector prediction value to integer pixel precision.

For example, in one embodiment, the relationship between the conversion coefficient s and the storage precision of the motion vector value may be that: assuming that the storage precision of the motion vector value is 1/m, when m=2ⁿ, then s=n can be determined. For example, assuming that the storage precision of the motion vector value is 1/16=1/2⁴, it can be determined that the conversion coefficient is 4.

In one embodiment, the processing device may determine whether the horizontal component is larger than or equal to 0, when converting the horizontal component of the motion vector prediction value to integer pixel precision using the first preset conversion rule and the conversion coefficient. When it is determined that the horizontal component is larger than or equal to 0, the difference between the conversion coefficient s and 1 can be shifted to the left by 1 bit to obtain the first shift value, and a sum of the first shift value and the horizontal components may be shifted to the right by s bits to obtain a second shift value, and then the second shift value may be shifted to the left by s bits to obtain the integer pixel precision of the horizontal component.

In some embodiments, when the horizontal component is larger than or equal to 0, the horizontal component is MV1x and the integer pixel precision of the horizontal component is MV2x, the first preset conversion rule may include:
when MV1x≥0, MV2x =((MV1x +(1<<(s - 1)))>>s)<<s,
where the "«" is used to indicate the left shift, the "»" is used to indicate the right shift, the "1<<(s-1)" is used to indicate the first shift value, and the "(MV1x + (1<<(s-1)))>>s" is used to indicate the second shift value. In some embodiments, if MV1x is shifted by n bits to the left, it means that MV1x is multiplied by 2ⁿ, and if MV1x is shifted to the right by n bits, it means the quotient of MV1x divided by 2ⁿ without counting the remainder, where n is a positive integer greater than or equal to 1.

For example, assuming that the storage precision of the motion vector value is 1/4, the processing device can determine that the conversion coefficient s is 2. If the horizontal component MV1x is 3 and the binary value is "11", the horizontal component MV1x is larger than 0, and the calculation process of MV2x includes:
calculating "s-1", for example, when s-2, s-1=2-1=1;
calculating "1<<(S-1)", for example, 1<<1 gives a binary integer 10 or a decimal integer 2;
calculating "MV1x+(1<<(S-1))", for example, when MV1x=3, MV1x+(1<<(S-1))=11+10=101;
calculating MV1x+(1<<(S-1))>>s, for example, shifting the previous result, that is, a binary number 101 of 5, to the right by 2 bits, 101>>2=1; and
calculating (MV1x+(1<<(S-1))>>s)<<s, for example, MV2x=1<<2=100.

It can be seen that in the above process, the processing device can shift the difference 1 between the conversion coefficient 2 and 1 by 1 bit to the left to obtain the first shift value 2, and shift the sum of the first shift value 2 and the horizontal components 3, 5, to the right by 2 bits to obtain a second shift value of 1. Then the second shift value 1 is shifted to the left by 2 bits to obtain an integer pixel precision MV2x of 4 for the horizontal component.

In other embodiments, when the horizontal component is larger than or equal to 0, the first preset conversion rule may include but is not limited to the above conversion rule, and may also be other conversion rules, as long as the horizontal component can be converted to integer pixel. For example, the first preset conversion rule may also be:
when MV1x≥0, when MV1x≥0, MV2x =((MV1x>>s)<<s.

For example, assuming that the storage precision of the motion vector value is 1/4, the processing device can determine that the conversion coefficient s is 2. If the horizontal component MV1x is 5 and the binary value is "101", the horizontal component MV1x is larger than 0, and the calculation process of MV2x includes:

calculating MV1x>>s, for example, MV1x=5, 5>>2 giving a binary number 001 and decimal number 1; and

calculating (MV1x>>s)<<s, for example, MV2x=1<<2 giving a binary number 100 and a decimal number 4.

It can be seen that in the above process, the processing device can shift MV1x, that is, 5 to the right by 2 bits to obtain 1, and then shift 1 to the left by 2 bits to obtain an integer pixel precision MV2x of 4 for the horizontal component.

In some embodiments, when the processing device determines that the horizontal component is smaller than 0, the difference between the first shift value and the horizontal component can be shifted to the right by s bit to obtain the third shift value. The third shift value then may be shifted to the left by s bits and be inversed, to obtain the integer pixel precision of the horizontal component. For example, when the processing device determines that the horizontal component is smaller than 0, the horizontal component is MV1x, and the integer pixel precision of the horizontal component is MV2x, the first preset conversion rule may include:
when MV1x<0, MV2x =-((-MV1x) +(1<<(s - 1)))>>s)<<s,
where the "«" is used to indicate the left shift, the "»" is used to indicate the right shift, "-MV1x" indicates that the MV1x is inversed, and the " (-MV1x + (1<<(s-1)))>>s" is used to indicate the third shift value.

For example, assuming that the storage precision of the motion vector value is 1/4, the processing device can determine that the conversion coefficient s is 2. If the horizontal component MV1x is -7, the horizontal component MV1x is smaller than 0, and the calculation process of MV2x includes:
calculating "s-1", for example, when s-2, s-1=2-1=1;
calculating "1<<(S-1)", for example, 1«1 gives a binary integer 10 or a decimal integer 2;
calculating "-MV1x+(1<<(S-1))", for example, when MV1x=7, -MV1x+(1<<(S-1))=111+10=1001;
calculating (-MV1x+(1<<(S-1)))>>s, for example, shifting the previous result, that is, a binary number 1001 of 9, to the right by 2 bits, 1001»2=2; and
calculating -((-MV1x+(1<<(S-1)))>>s)<<s, for example, MV2x=-1<<2=-8.

It can be seen that in the above process, the processing device can shift the difference 1 between the conversion coefficient 2 and 1 by 1 bit to the left to obtain the first shift value 2, and the horizontal component -7 is inversed to get 7. Then the sum of the first shift value 2 and 7, that is, 9, is shifted to the right by 2 bits to obtain the third shift value of 2. Then the third shift value 2 is shifted to the left by 2 bits and inversed to obtain an integer pixel precision MV2x of - 8 for the horizontal component.

In other embodiments, when the horizontal component is smaller than 0, the first preset conversion rule may include but is not limited to the above conversion rule, and may also be other conversion rules, as long as the horizontal component can be converted to integer pixel. For example, the first preset conversion rule may also be:
when MV1x<0, MV2x =-(((-MV1x)>>s)<<s).

For example, assuming that the storage precision of the motion vector value is 1/4, the processing device can determine that the conversion coefficient s is 2. If the horizontal component MV1x is -5, the horizontal component MV1x is smaller than 0, and the calculation process of MV2x includes:
calculating -MV1x>>s, for example, MV1x=-5, 5»2 giving a binary number 001 and decimal number 1;
calculating ((-MV1x)>>s)<<s, for example, MV2x=1<<2 giving a binary number 100 and a decimal number 4; and
calculating -(((-MV1x)>>s)<<s), for example, MV2x=-4.

It can be seen that in the above process, the processing device can make MV1x, that is, -5 inversed to get 5, and then shift 5 to the right by 2 bits to obtain 1, and then shift 1 to the left by 2 bits to obtain an integer pixel precision MV2x of -4 for the horizontal component.

In one embodiment, the processing device may determine whether the vertical component is larger than or equal to 0, when converting the vertical component of the motion vector prediction value to integer pixel precision using the second preset conversion rule and the conversion coefficient. When it is determined that the vertical component is larger than or equal to 0, the difference between the conversion coefficient s and 1 can be shifted to the left by 1 bit to obtain the fourth shift value, and a sum of the fourth shift value and the vertical components may be shifted to the right by s bits to obtain a fifth shift value, and then the fifth shift value may be shifted to the left by s bits to obtain the integer pixel precision of the vertical component. For example, when the vertical component is larger than or equal to 0, the vertical component is MV1y and the integer pixel precision of the horizontal component is MV2y, the second preset conversion rule may include:
when MV1y≥0, MV2y =((MV1y +(1<<(s - 1)))>>s)<<s.

The detailed calculating process is similar to the previous description.

In other embodiments, when the vertical component is larger than or equal to 0, the second preset conversion rule may include but is not limited to the above conversion rule, and may also be other conversion rules, as long as the vertical component can be converted to integer pixel. For example, the second preset conversion rule may also be:
when MV1y≥0, MV2y =((MV1y>>s)<<s.

The detailed calculating process is similar to the previous description.

In some embodiments, when the processing device determines that the vertical component is smaller than 0, the difference between the fourth shift value and the vertical component can be shifted to the right by s bit to obtain a sixth shift value. The sixth shift value then may be shifted to the left by s bits and be inversed, to obtain the integer pixel precision of the vertical component. For example, when the processing device determines that the vertical component is smaller 0, the vertical component is MV1y, and the integer pixel precision of the vertical component is MV2y, the second preset conversion rule may include:
when MV1y<0, MV2y =-((-MV1y +(1<<(s - 1)))>>s)<<s.

The detailed calculating process is similar to the previous description.

In other embodiments, when the vertical component is smaller than 0, the second preset conversion rule may include but is not limited to the above conversion rule, and may also be other conversion rules, as long as the vertical component can be converted to integer pixel. For example, the second preset conversion rule may also be:
when MV1y<0, MV2y =-(((-MV1y)>>s)<<s).

The detailed calculating process is similar to the previous description.

In one embodiment, the motion vector value may include the horizontal component. When converting the precision of the motion vector value, the processing device may obtain the horizontal component of the motion vector value included in the first motion information candidate list of the first image block (the motion vector value can be part of the motion vector value in the first motion information candidate list, all the motion vector values, or the motion vector value that meets the preset conditions), and convert the horizontal component of the motion vector value to integer pixel precision. The detailed implementation is similar to the previous description.

In one embodiment, the motion vector value may include the vertical component. When converting the precision of the motion vector value, the processing device may obtain the vertical component of the motion vector value included in the first motion information candidate list of the first image block (the motion vector value can be part of the motion vector value in the first motion information candidate list, all the motion vector values, or the motion vector value that meets the preset conditions), and convert the vertical component of the motion vector value to integer pixel precision. The detailed implementation is similar to the previous description.

When the existing triangle prediction mode is adopted, the CU minimally processed by the triangle prediction mode may be set to 4×8 or 8×4. Taking FIG. 9 as an example, FIG. 9 is a schematic diagram showing a processing encoding unit for triangular prediction provided by the existing technologies. It is assumed that the worst case of HEVC (1/4 pixel precision MV) is an 8×8 bidirectional inter-frame prediction CU and the number of the reference pixel points are (8+7)*(8+7)x2=450. Versatile video coding (VVC) triangle prediction may set the minimum processing CU to 4×8/8×4. For the 4×8/8×4 bidirectional inter-frame prediction CU in the worst case (1/4 pixel precision MV), the number of reference pixels is (8+7)*(4+7)*2*4=660. Compared with HEVC, VVC has increased by 47%, causing greater bandwidth pressure.

Therefore, in the present disclosure, the dual motion vector value included in the dual motion-information may be converted to integer pixel precision, which reduces bandwidth pressure and improves bandwidth utilization.

In one embodiment, after the processing device converts the precision of the corresponding motion vector value according to the size of the first image block, it may also reestablish the first motion information candidate list of the current image according to the motion vector value after the precision conversion, such that when the processing device receives the call instruction of the motion information candidate list, it can directly call the converted motion vector values in the motion information candidate list, thereby improving the efficiency of video encoding or decoding. Or, there may be no re-establishment process. When constructing the first motion information candidate list, the precision of at least part of the to-be-added motion information to the first motion information candidate list can be converted, such that the precision of the motion vector value corresponding to at least part of the motion information in the first motion information candidate list is obtained by conversion, that is, the precision has been adjusted.

It should be understood that for the motion information in the first motion information candidate list, regardless of whether it includes dual motion-information and/or single motion-information, the precision of the motion vector values corresponding to at least part of the motion information in the first motion information candidate list can be converted, to improve the performance of video encoding/decoding. Especially for dual motion-information, the precision conversion may be performed on the corresponding dual motion vector value, and it may not be needed to adjust the dual motion-information to one piece of single motion-information. Also, it may not be needed to reorganize the candidate list a to the candidate list b as described above, which simplifies the construction of the first motion information candidate list and also reduces the processing complexity.

In the present disclosure, the processing device may obtain the motion information candidate list of the first image block from the code stream, and convert the precision of the motion vector value in the motion information candidate list according to the size of the first image block, to perform video encoding/decoding according to the motion information candidate after the precision conversion. Correspondingly, the bandwidth utilization rate can be improved, the encoding or decoding operation can be simplified, and the encoding or decoding efficiency can be improved.

Further, in some embodiments, the precision of the motion vector value may be converted according to a call instruction corresponding to the motion vector value. The conversion process may include the following.

In A1, the motion information candidate list of the first image block may be obtained from the code stream.

In one embodiment, the processing device may obtain the first motion information candidate list of the first image block from the code stream. The first motion information candidate list may include the motion vector value. The detailed implementation is similar to the previous description.

In B1, the size of the first image block may be obtained.

The processing device may obtain the size of the first image block. In some embodiments, the first image block may be an encoding unit CU, and the size of the first image block may consist of the width and height of the encoding unit CU, that is, the size of the first image block may be W×H.

In C1, when the call function of the motion vector value in the first motion information candidate list is received, the precision of the motion vector value may be converted according to the size of the first image block.

In the present disclosure, after obtaining the first motion information candidate list of the first image block from the code stream, the processing device may convert the precision of the motion vector value according to the size of the first image block when receiving the call instruction of the motion vector value in the first motion information candidate list. In some embodiments, the processing device may also convert the precision of the motion vector value when receiving other call request for requesting the use of the motion vector value in the first motion information candidate list. It should be understood that the first dual motion-information may include the first target dual motion-information, and the first target dual motion-information may be the first dual motion-information or may be a certain type of or a certain specific dual motion-information in the first dual motion-information. The call instruction can be used to indicate the precision conversion of the dual motion vector value included in the first target dual motion-information, or it can be used to indicate the precision conversion of the motion vector value corresponding to the dual motion-information or the single motion-information other than the first target dual motion-information.

By performing the integer pixel conversion on the motion vector value in the first motion information candidate list when calling the first motion information candidate list, the integer pixel conversion of the motion vector value according to the requirement may be achieved.

In one embodiment, when receiving the call instruction of the motion vector value in the first motion information candidate list, the processing device may determine whether the size of the first image block satisfies the first condition. When the size of the first image block satisfies the first condition, the at least one motion vector value included in the at least one piece of dual motion-information in the first motion information candidate list of the first image block may be converted into integer pixel precision. The specific embodiments are as described above, and will not be repeated here.

In one embodiment, when the processing device determines that the first image block does not satisfy the first condition, the processing device may convert all the motion vector values in the first motion information candidate list of the first image block into integer pixel precision. The specific embodiments are as described above, and will not be repeated here.

In the present disclosure, the processing device may obtain the first motion information candidate list of the first image block from the code stream, and obtain the size of the first image block. When receiving the call instruction of the motion vector value in the first motion information candidate list, the precision of the motion vector value may be converted according to the size of the first image block. By performing the integer pixel conversion on the motion vector value in the first motion information candidate list when calling the first motion information candidate list, the integer pixel conversion of the motion vector value according to the requirement may be achieved. The bandwidth utilization may be improved, the encoding or decoding operation may be simplified, and the efficiency of encoding or decoding and the user experience may be improved.

Further, in some embodiments, the precision of any one motion vector value in the first target dual motion-information may be converted to integer pixel precision. The process may include the following.

In A2, the motion information candidate list of the first image block may be obtained from the code stream.

In one embodiment, the processing device may obtain the first motion information candidate list of the first image block from the code stream. The detailed implementation is similar to previous description.

In B2, whether the size of the first image block satisfies the second condition may be determined. When the size of the first image block satisfies the second condition, C2 may be executed, otherwise D2 may be executed.

The processing device may determine whether the size of the first image block satisfies the second condition. When the size of the first image block satisfies the second condition, C2 may be executed, otherwise D2 may be executed. In some embodiments, the second condition may include that the first image block includes at least two dual motion vectors and the size of the first image block satisfies a preset range threshold. In some embodiments, the preset range threshold includes, but is not limited to, that the size of the first image block is greater than or equal to 64 pixels; or, the size of the first image block is greater than 16 pixels and less than 64 pixels. The specific embodiments and examples are described above and will not be repeated here.

In C2, the precision of any one motion vector value included in the at least one piece of dual motion-information in the motion information candidate list of the first image block may be converted to the integer pixel precision.

In some embodiments, when it is determined that the size of the first image block satisfies the second condition, the processing device may convert the precision of any one motion vector value included in the at least one piece of dual motion-information in the motion information candidate list of the first image block to the integer pixel precision.

In one embodiment, before converting the precision of any one motion vector value included in the at least one piece of dual motion-information in the motion information candidate list of the first image block to the integer pixel precision, the processing device may detect whether the motion information candidate list of the first image block includes at least one piece of dual motion-information. When it is detected that the motion information candidate list of the first image block includes at least one piece of dual motion-information, the processing device may perform the process for converting the precision of any one motion vector value included in the at least one piece of dual motion-information in the motion information candidate list of the first image block to the integer pixel precision.

For example, the first image block is an encoding unit CU, and the size of the encoding unit CU is 8×8. Correspondingly, the size of the encoding unit CU is 8×8 equal to 64. When it is detected that the motion information candidate list of the first image block includes one piece of dual motion-information, the processing device may convert the precision of any one motion vector value included in at least one piece of dual motion-information in the first motion information candidate list into integer pixel precision.

In the present disclosure, the integer pixel precision conversion may be performed on any one motion vector value in the dual motion-information, to reduce the pressure on the band width and improve the bandwidth utilization to a certain extent.

In D2, all of the motion vector values in the motion information candidate list of the first image blocks may be converted into integer pixel precision.

In some embodiments, when it is determined that the size of the first image block does not satisfy the second condition, the processing device may convert all of the motion vector values in the motion information candidate list of the first image blocks into integer pixel precision.

For example, the first image block is an encoding unit CU, and the size of the encoding unit CU is 4×8. Correspondingly, the size of the encoding unit CU is 4×8 equal to 32. Since 32 is smaller than 64, the processing device may convert the precision of all motion vector values included in at least one piece of dual motion-information in the first motion information candidate list into integer pixel precision.

By converting all motion vector values in the first motion information candidate list of the first image block that does not meet the second condition into integer pixel precision, the limitation that the existing triangle prediction mode can be only used for image blocks with 64 or more pixels, improving the performance of the triangular prediction mode.

In the present disclosure, the processing device may obtain the first motion information candidate list of the first image block from the code stream, and determine whether the size of the first image block meets the second condition. When the size of the first image block meets the second condition, the processing device may convert any one of the motion vector values included in the at least one piece of dual motion-information in the first motion information candidate list of the image block to integer pixel precision. When the size of the first image block does not satisfy the second condition, the processing device may convert all motion vector values in the first motion information candidate list of the image block to integer pixel precision. Correspondingly, the bandwidth utilization rate may be improved to a certain extent, the encoding or decoding operation may be simplified, and the encoding or decoding efficiency may be improved.

The embodiment where the horizontal component of the motion vector value in the motion information candidate list is converted to the integer pixel precision will be illustrated below. The method may include the following.

In A3, the first motion information candidate list of the first image block may be obtained from the code stream.

In one embodiment, the processing device may obtain the first motion information candidate list of the first image block from the code stream. The detailed implementation is similar to the previous description.

In B3, the horizontal component of the motion vector value in the first motion information candidate list of the first image block may be obtained.

In one embodiment, the processing device may obtain the horizontal component of the motion vector value in the first motion information candidate list of the first image block.

In C3, the horizontal component of the motion vector value may be converted to the integer pixel precision.

In one embodiment, the processing device may convert the horizontal component of the motion vector value to the integer pixel precision.

In the present disclosure, when the processing device converts the horizontal component of the motion vector value to the integer pixel precision, the processing device may obtain the horizontal component of the motion vector value in the first motion information candidate list of the first image block and convert the horizontal component of the motion vector value to the integer pixel precision.

In some embodiments, when the processing device converts the dual motion vector value in the first motion information candidate list of the first image block, the processing device may obtain the horizontal component of the dual motion vector value, and convert the horizontal component of the dual motion vector value to the integer pixel precision.

In some embodiments, when the processing device converts all motion vector values in the first motion information candidate list of the first image block, the processing device may obtain the horizontal components of all motion vector values, and convert the horizontal components of all motion vector values to the integer pixel precision.

In one embodiment, when the processing device adjusts the horizontal component of the motion vector value into integer pixel precision, it may determine the conversion coefficient s according to the storage precision of the motion vector value, and use the first preset conversion rule and the conversion coefficient s to convert the horizontal component of the predicted value of the motion vector into the integer pixel precision. The relationship between the conversion coefficient s and the storage precision of the motion vector value may be similar to the previous description.

In one embodiment, the processing device may determine whether the horizontal component is larger than or equal to 0, when converting the horizontal component of the motion vector prediction value to integer pixel precision using the first preset conversion rule and the conversion coefficient s. When it is determined that the horizontal component is larger than or equal to 0, the difference between the conversion coefficient s and 1 can be shifted to the left by 1 bit to obtain the first shift value, and a sum of the first shift value and the horizontal components may be shifted to the right by s bits to obtain a second shift value, and then the second shift value may be shifted to the left by s bits to obtain the integer pixel precision of the horizontal component. The first preset conversion rule when the horizontal component is larger than or equal to 0 may be similar to the previous description.

In other embodiments, when the horizontal component is larger than or equal to 0, the first preset conversion rule may include but is not limited to the above conversion rule, and may also be other conversion rules, as long as the horizontal component can be converted to integer pixel.

In some embodiments, when the processing device determines that the horizontal component is smaller than 0, the difference between the first shift value and the horizontal component can be shifted to the right by s bit to obtain the third shift value. The third shift value then may be shifted to the left by s bits and be inversed, to obtain the integer pixel precision of the horizontal component. The first preset conversion rule when the horizontal component is smaller than 0 may be similar to the previous description.

In other embodiments, when the horizontal component is smaller than 0, the first preset conversion rule may include but is not limited to the above conversion rule, and may also be other conversion rules, as long as the horizontal component can be converted to integer pixel.

In the present disclosure, the processing device may obtain the first motion information candidate list of the first image block from the code stream, obtain the horizontal component of the motion vector value in the first motion information candidate list of the first image block, and convert the horizontal component of the motion vector value converted to integer pixel precision, such that video encoding or decoding can be performed according to the motion vector value whose horizontal component is converted to integer pixel precision. Correspondingly, the bandwidth utilization rate may be improved to a certain extent, the encoding or decoding operation may be simplified, and the encoding or decoding efficiency may be improved.

The embodiment where the vertical component of the motion vector value in the motion information candidate list is converted to the integer pixel precision will be illustrated below. The method may include the following.

In A4, the first motion information candidate list of the first image block may be obtained from the code stream.

In one embodiment, the processing device may obtain the first motion information candidate list of the first image block from the code stream. The detailed implementation is similar to the previous description.

In B4, the vertical component of the motion vector value in the first motion information candidate list of the first image block may be obtained.

In one embodiment, the processing device may obtain the vertical component of the motion vector value in the first motion information candidate list of the first image block.

In C4, the vertical component of the motion vector value may be converted to the integer pixel precision.

In the present disclosure, when the processing device converts the vertical component of the motion vector value to the integer pixel precision, the processing device may obtain the vertical component of the motion vector value in the first motion information candidate list of the first image block and convert the vertical component of the motion vector value to the integer pixel precision. The horizontal component of the motion vector value may change or remain unchanged. More preferably, the pixel precision of the horizontal component of the motion vector value may remain unchanged.

In some embodiments, when the processing device converts at least one motion vector value in the dual motion-information in the first motion information candidate list of the first image block, the processing device may obtain the vertical component of the at least one motion vector value in the dual motion-information, and convert the vertical component of the at least one motion vector value in the dual motion-information to the integer pixel precision.

In some embodiments, when the processing device converts all motion vector values in the first motion information candidate list of the first image block to integer pixel precision, the processing device may obtain the vertical components of all motion vector values in the first motion information candidate list, and convert the vertical components of all motion vector values to the integer pixel precision.

In one embodiment, when the processing device adjusts the vertical component of the motion vector value into integer pixel precision, it may determine the conversion coefficient s according to the storage precision of the motion vector value, and use the second preset conversion rule and the conversion coefficient s to convert the vertical component of the predicted value of the motion vector into the integer pixel precision. The relationship between the conversion coefficient s and the storage precision of the motion vector value may be similar to the previous description.

In one embodiment, the processing device may determine whether the vertical component is larger than or equal to 0, when converting the vertical component of the motion vector prediction value to integer pixel precision using the second preset conversion rule and the conversion coefficient s. When it is determined that the vertical component is larger than or equal to 0, the difference between the conversion coefficient s and 1 can be shifted to the left by 1 bit to obtain the fourth shift value, and a sum of the fourth shift value and the vertical components may be shifted to the right by s bits to obtain a fifth shift value, and then the fifth shift value may be shifted to the left by s bits to obtain the integer pixel precision of the vertical component. The second preset conversion rule when the vertical component is larger than or equal to 0 may be similar to the previous description.

In other embodiments, when the vertical component is larger than or equal to 0, the second preset conversion rule may include but is not limited to the above conversion rule, and may also be other conversion rules, as long as the vertical component can be converted to integer pixel. Details are similar to the above, and are not repeated.

In some embodiments, when the processing device determines that the vertical component is smaller than 0, the difference between the fourth shift value and the vertical component can be shifted to the right by s bit to obtain the sixth shift value. The sixth shift value then may be shifted to the left by s bits and be inversed, to obtain the integer pixel precision of the vertical component. The second preset conversion rule when the vertical component is smaller than 0 may be similar to the previous description.

In the present disclosure, the processing device may obtain the first motion information candidate list of the first image block from the code stream, obtain the vertical component of the motion vector value in the first motion information candidate list of the first image block, and convert the vertical component of the motion vector value converted to integer pixel precision, such that video encoding or decoding can be performed according to the motion vector value whose vertical component is converted to integer pixel precision. Correspondingly, the bandwidth utilization rate may be improved to a certain extent, the encoding or decoding operation may be simplified, and the encoding or decoding efficiency may be improved.

The precision conversion of the motion vector value of the first dual motion-information and the adjustment of the first dual motion-information to one piece of first single motion-information was described above. For different first dual motion-information, the processing rule may be different.

Specifically, when the first dual motion-information is the first target dual motion-information, the preset rule for adjusting the first target dual motion-information is: converting the precision of at least one motion vector value included in the first dual motion-information. When the first dual motion-information is the second target dual motion-information that is different from the first dual target motion-information, the preset rule for adjusting the second target dual motion-information is: adjusting the first dual motion-information to one piece of first single motion-information as the motion information of the sub-image-block.

After the dual motion-information is selected from the first motion information candidate list, the dual motion-information can be adjusted to one piece of first single motion-information or the precision of at least one motion vector value included in the dual motion-information can be adjusted. In one embodiment, when constructing the first motion information candidate list, the dual motion-information can also be adjusted to single motion-information.

When constructing the motion information candidate list, any one piece of dual motion-information may be adjusted to one piece of single motion-information, or specific dual motion-information may be adjusted to single motion-information. When the specific dual motion-information is adjusted to single motion-information, there may be dual motion-information in the first motion information candidate list. When the dual motion-information is selected from the first motion information candidate list (for example, the first dual motion-information mentioned above), the dual motion-information can be adjusted to single motion-information to encode or decode the image block according to the above-mentioned method. It should be understood that when constructing the first motion information candidate list, even if the adjustment from dual motion-information to single motion-information is not performed, the first motion information candidate list may include both single motion-information and dual motion-information, or only include dual motion-information, or only include single motion-information.

The following will introduce how to adjust the dual motion-information (that is, the second dual motion-information mentioned below) to one piece of single motion-information (that is, the second single motion-information mentioned below) in the motion information candidate list. Optionally, in the embodiments of the present disclosure, the manner of adjusting the first dual motion-information to the first single motion-information may be the same as or different from the manner of adjusting the second dual motion-information to the second single motion-information.

In one embodiment, the processing device may select one piece of single motion-information from the second dual motion-information as the second single motion-information.

Optionally, the processing device may select one piece of motion information from the second dual motion-information as the second single motion-information according to a preset rule. The preset rule may be used to instruct the selection of single motion-information set in a specific list from the second dual motion-information, and the specific list may be the second list or the first list.

Specifically, the preset rule may be preset on the processing device, and the preset rule may indicate whether to select single motion-information belonging to the first list or to select single motion-information belonging to the second list, such that the processing device can select the single motion-information from the second double motion information based on the preset rule.

Alternatively, in some embodiments, an algorithm may also be used to select one piece of motion information from the first dual motion-information as the first single motion-information.

Optionally, in some embodiments, in the first motion information candidate list, the second single motion-information corresponding to the at least two dual motion-information may belong to different lists. The list may include the second list and the first list.

That is, for the first motion information candidate list, the single motion-information adjusted from the dual motion-information may belong to two lists, that is, the first list and the second list.

Optionally, in some embodiments, the selection manner of selecting the second single motion-information for the second dual motion-information may be updatable.

Specifically, for different image blocks, the selection methods for selecting single motion-information for the sub-image-blocks included therein may be different.

For example, for the previous image block of the current image block, the aforementioned preset rule may be used to select the single motion-information of each sub-image-block included. And for the current image block, the aforementioned algorithm can be used to select single motion-information for each sub-image-block included.

Or, for different sub-image-blocks of the same image block, the selection method of selecting single motion-information from dual motion-information may be different.

For example, for the previous sub-image-block of the current sub-image-block (the previous sub-image-block belongs to the same image block as the current sub-image-block), the single motion-information may be selected in the manner of the preset rules mentioned above. For the current sub-image-block, the above-mentioned algorithm can be used to select single motion-information for it.

Of course, in some embodiments, different image blocks or different sub-image-blocks may correspond to the same single motion-information selection method.

In one embodiment, when one piece of second single motion-information is selected from the second dual motion-information, for the encoding end, the second identifier of the second single motion-information can be written into the encoding code stream.

Correspondingly, for the decoding end, the second identifier of the second single motion-information can be obtained from the decoded code stream, such that according to the second identifier, one piece of single motion-information can be selected from the second dual motion-information as the second single exercise information.

For example, the identifiers of the single motion-information included in the second dual motion-information may be 0 and 1, respectively. When the encoding end selects the single motion-information with the identifier 0 as the second single motion-information, the identifier 0 can be written to the code stream. And the decoding end can obtain the identifier 0 from the decoded code stream, such that the decoding end can determine the motion information with the identifier 0 in the second dual motion-information as the second single motion-information.

In the case that the encoding end writes the second identifier into the encoding code stream, the encoding end may select the second single motion-information based on an algorithm. And then for the decoding end, it may be not needed to use the algorithm again to achieve the selection of the second single motion-information from the second dual motion-information.

When the encoding end selects the second single motion-information from the second dual motion-information through the above-mentioned preset rule, the decoding end can also select the second single motion-information from the second dual motion-information through the same preset rule.

Of course, even if the encoding end selects the second single motion-information from the second dual motion-information through the aforementioned preset rules, the encoding end can still write the identifier of the second single motion-information into the encoding bitstream, such that the decoding end can select one piece of single motion-information from the second dual motion-information as the second single motion-information according to the second identifier.

In some embodiments, in addition to obtaining the second single motion-information by selecting one piece of single motion-information from the second dual motion-information, the second dual motion-information may also be merged to obtain the second single motion-information.

In one embodiment, since the two pieces of motion information included in the dual motion-information may belong to different reference frames, before the second dual motion-information is merged, one piece of motion information in the second dual motion-information may be scaled based on another motion information in the second dual motion-information. Specifically, the scaling process may be similar to the description of FIG. 5 above. The reference frame of the motion information after the merging process may be the reference frame pointed to by another motion information.

The merging process may be a weighting processing or an averaging processing.

Optionally, in one embodiment, the merging process may be the weighting processing. The processing device may determine the weight of each piece of motion information in the second dual motion-information, such that the weighting process can be performed on the motion information in the second motion information based on the weight.

Factors influencing the weight of each piece of motion information in the second dual motion-information may include at least one of the following:
the size of the first image block, the pixel value of the first image block, the pixel value of the area adjacent to the first image block, the size and/or number of pieces of motion information belonging to the first list in the motion information added to the first motion information candidate list, or the size and/or number of pieces of motion information belonging to the second list in the motion information added to the first motion information candidate list.

In one embodiment, the size of the first image block may include the width and height of the first image block, and the processing device may determine the weight of each piece of motion information in the second dual motion-information according to the width and height of the first image block. Specifically, the weight of each piece of motion information can be determined according to the absolute value of the width and the height, and/or the ratio between the width and the height.

For example, if the width and height of the first image block are both greater than 32 pixels, a ratio between the weight of the motion information belonging to the list 0 in the second dual motion-information and the weight of the motion information belonging to the list 1 in the second dual motion-information may be 2 :1. If the width and height of the first image block are both greater than 16 pixels and less than or equal to 32 pixels, a ratio between the weight of the motion information belonging to the list 0 in the second dual motion-information and the weight of the motion information belonging to the list 1 in the second dual motion-information may be 1:1. For other cases, a ratio between the weight of the motion information belonging to the list 0 in the second dual motion-information and the weight of the motion information belonging to the list 1 in the second dual motion-information may be 1:2.

For example, in another embodiment, a ratio between the weight of the motion information belonging to the list 0 in the second dual motion-information and the weight of the motion information belonging to the list 1 in the second dual motion-information may be equal to a ratio between the width of the first image block and the height of the first image block.

In some other embodiments, the processing device may calculate first-degree gradient or second-degree gradient in any one direction of the horizontal, vertical, 45 degree (45 degrees from the horizontal direction), or 135 degree (135 degrees from the horizontal direction) direction of the first image block and/or its neighboring areas based on the pixel values of the first image block and/or its adjacent areas. The texture direction may be determined according to the gradient direction. Then, a higher weight may be assigned to the motion information (single MV) that is closer to this texture direction in the second dual motion-information (for example, dual MV). Specifically, the adjacent area of the first image block mentioned here may be an area around the first image block (adjacent to the first image block and/or a preset area between the first image block). For example, when the first image block is a quadrilateral, the adjacent area may be at least one surrounding area, and the size of the adjacent area may be preset on the processing device, or may be obtained by other means.

In another embodiment, the processing device may determine the weight of each piece of motion information included in the dual motion-information according to the ratio between the number of pieces of motion information belonging to the first list in the added motion information of the first motion information candidate list and the number of pieces of motion information belonging to the second list in the added motion information of the first motion information candidate list.

For example, a ratio between the number of MVs added into the first motion information candidate list and with motion information belonging to list 0 and the number of MVs added into the first motion information candidate list and with motion information belonging to list 1 may be equal to a ratio between the weight of the motion information in the first dual motion-information that belongs to the list 0 and the weight of the motion information in the first dual motion-information that belongs to the list 1.

For description purposes only, the previous embodiments with various methods for adjusting the second dual motion-information to one piece of second single motion-information are used as examples to illustrate the present disclosure, and should not limit the scope of the present disclosure. In various embodiments of the present disclosure, any suitable methods may be used for adjusting the second dual motion-information to one piece of second single motion-information. And which method is used for adjusting the second dual motion-information to one piece of second single motion-information may be preset in the processing device.

For example, in one embodiment, a method that selects one piece of single motion-information from the second dual motion-information may be preset in the processing device for adjusting one piece of dual motion-information to one piece of single motion-information.

Specifically, whether a mode that uses a preset rule to select one piece of single motion-information from the second dual motion-information or a mode that uses an algorithm to select one piece of single motion-information from the second dual motion-information may be preset in the processing device or may be determined from other manners.

For example, in some other embodiments, a method that merges the second dual motion-information to one piece of single motion-information may be preset in the processing device for adjusting one piece of dual motion-information to one piece of single motion-information.

Specifically, whether a merging process or an averaging process is used may be preset in the processing device or may be determined from other manners.

For example, in some other embodiments, a process that averages the second dual motion-information to one piece of single motion-information may be preset in the processing device for adjusting one piece of dual motion-information to one piece of single motion-information.

Specifically, when the averaging process is used, whether the motion information belonging to the list 0 is scaled based on the list 1 or the motion information belonging to the list 1 is scaled based on the list 0 may be preset in the processing device or may be determined from other manners.

For example, in some other embodiments, a process that performs the weighting process on the second dual motion-information to form one piece of single motion-information may be preset in the processing device for adjusting one piece of dual motion-information to one piece of single motion-information.

Specifically, when the weighting process is used, whether the motion information belonging to the list 0 is scaled based on the list 1 or the motion information belonging to the list 1 is scaled based on the list 0 may be preset in the processing device or may be determined from other manners.

In some other embodiments, a second adjustment method for adjusting the second dual motion-information to the one piece of second single motion-information may be selected from a plurality of second methods according to factors including: the size of the second image block, the pixel values of the second image block, the pixel values of regions adjacent to the second image block, a size and/or number of pieces of motion information belonging to the second list of the motion information that has been added into the second motion information candidate list, or a size and/or number of pieces of motion information belonging to the second list of the motion information that has been added into the second motion information candidate list.

The plurality of second methods may include at least one of the following:
1b) determining the motion information in the second dual motion-information belonging to the first list as the second single motion-information;
2b) determining the motion information in the second dual motion-information belonging to the second list as the second single motion-information;
3b) scaling the motion information in the second dual motion-information belonging to the first list based on the motion information belonging to the second list, and performing weighting process on the motion information belonging to the second list and the scaled motion information belonging to the first list, to obtain the second single motion-information;
4b) scaling the motion information in the second dual motion-information belonging to the second list based on the motion information belonging to the first list, and performing weighting process on the motion information belonging to the first list and the scaled motion information belonging to the second list, to obtain the second single motion-information;
5b) scaling the motion information in the second dual motion-information belonging to the second list based on the motion information belonging to the first list, and performing averaging process on the motion information belonging to the first list and the scaled motion information belonging to the second list, to obtain the second single motion-information;
6b) scaling the motion information in the second dual motion-information belonging to the first list based on the motion information belonging to the second list, and performing an averaging process on the motion information belonging to the second list and the scaled motion information belonging to the first list, to obtain the second single motion-information.

In one embodiment, the size of the first image block may include the width and height of the first image block, and the processing device may determine which of the above methods 1b)-6b) to be used according to the width and height of the first image block. Specifically, the absolute value of width and height, and/or the ratio between width and height, can be used to determine which of the above methods 1b)-6b) is to be used.

For example, when the width and the height of the first image block are both larger than 32 pixels, the method 1b) may be used; when the width and the height of the first image block are both smaller than or equal to 16 pixels, the method 2b) may be used; in other conditions, methods 3b) to 6b) may be used.

For example, when the ratio between the width of the first image block and the height of the first image block is larger than 1, the method 1b) may be used; when the ratio between the width of the first image block and the height of the first image block is smaller than 1, the method 2b) may be used; when the ratio between the width of the first image block and the height of the first image block equals 1, the methods 3b) to 6b) may be used.

In some other embodiments, the processing device may calculate first-degree gradient or second-degree gradient in at least one direction of the horizontal, vertical, 45 degree, or 135 degree direction of the first image block and/or its neighboring areas based on the pixel values of the first image block and/or its adjacent areas. The texture direction may be determined according to the gradient direction. When the texture direction is closer to the motion information in the first dual motion-information that belongs to the first list, the method 1b) may be used. When the texture direction is closer to the motion information in the first dual motion-information that belongs to the second list, the method 2b) may be used.

In some other embodiments, the processing device may determine the weight of each piece of motion information in the first dual motion-information according to a ratio between the number of pieces of motion information belonging to the first list of the motion information that has been added into the first motion information candidate list and the number of pieces of motion information belonging to the first list of the motion information that has been added into the first motion information candidate list.

For example, when the number of pieces of motion information belonging to the first list of the motion information that has been added into the first motion information candidate list is larger, the method 1b) may be used. When the number of pieces of motion information belonging to the first list of the motion information that has been added into the first motion information candidate list is smaller, the method 2b) may be used. When the number of pieces of motion information belonging to the first list of the motion information that has been added into the first motion information candidate list is the same as the number of pieces of motion information belonging to the second list of the motion information that has been added into the first motion information candidate list, the methods 3b) to 6b) may be used.

In some embodiments, the plurality of second methods may include at least one of the following:
2A) selecting one piece of single motion-information from the second dual motion-information as the first second motion information;
2B) performing a merging process on the second dual motion-information to obtain the second single motion-information.

When the method 2A) is selected as the adjustment method, the implementation of selecting one piece of single motion-information from the second dual motion-information may be preset in the processing device or may be determined according to other factors.

When the method 2B) is selected as the adjustment method, the implementation of performing the merging process on the second dual motion-information may be preset in the processing device or may be determined according to other factors.

It should be understood that the method 2A) and/or the method 2B) may include a plurality of implementation methods respectively. For example, the method 2A) may include the method 1a) to the method 2a) described above with respect to the second dual motion-information, and the method 2B) may include the method 3a) to the method 6a) described above with respect to the second dual motion-information. When the processing device selects the method 2A) and/or the method 2B), it should be understood as that the detailed implementation methods included in the method 2A) and/or the method 2B) are selected.

Optionally, in various embodiments of the present disclosure, for different image blocks of the current frame, a same method in the above-mentioned plurality of adjustment methods may be used to realize the adjustment from the dual motion-information to the single motion-information. Or, for different image blocks of the current frame, a same method in the plurality of adjustment methods can be used to realize the adjustment from the dual motion-information to the single motion-information.

In the present disclosure, when constructing the motion information candidate list, if the motion information added to the motion information candidate list is dual motion-information, the dual motion-information can be adjusted to one piece of single motion-information, reducing the probability of selecting the dual motion-information for the sub-image-block from the first motion information candidate list. Correspondingly, the computational complexity caused by selecting the dual motion-information from the motion information candidate list for encoding or decoding may be avoided.

Further, when adding the to-be-added motion information to the motion information candidate list, the to-be-added motion information (it can be the motion information being processed from dual motion-information to single motion-information, or the unprocessed dual motion-information, but when adding to the motion information candidate list, further processing may be performed) directly to the motion information candidate list, instead of a process of constructing the candidate list a first and constructing the candidate list b based on the candidate list a. That is, only one list construction is required, which can avoid processing complexity.

In some embodiments, in the process of encoding the image frame, the number of subimages formed by dividing different image blocks may be different.

For example, the aforementioned first image block includes a plurality of sub-image-blocks, and there is a second image block, which includes only one sub-image-block.

In this case, if the method of constructing the first motion information candidate list for the first image block is completely different from the method of constructing the second motion information list for the second image block, the hardware used to construct the first motion information candidate list and the hardware used to construct the second motion information candidate list may not be compatible, resulting in a relatively complicated hardware structure of the processing device, which is not conducive to hardware implementation.

It should be understood that in the process of encoding image frames, the above-mentioned second motion information candidate list will necessarily be constructed, and it needs to be determined according to specific encoding and decoding requirements. The second motion information candidate list may only be used to illustrate the characteristics of the construction method of the first motion information candidate list, to clarify the characteristics of the construction method of the first motion information candidate list.

For this reason, in the embodiments of the present disclosure, to simplify the hardware structure of the processing device, the first motion information candidate list and the second motion information candidate list may include one or more of the following same aspects: the motion information that can be added have same type, the same type of motion information that can be added have same adding order in the all types of motion information, the motion information with the same type has same addition order in this type of motion information, or the same type of motion information that can be added are determined in the same manner.

The second motion information candidate list may be used for the selection of motion information of the image block as a whole. The second motion information candidate list may be a motion information candidate list in the Merge mode. Specifically, the Merge mode mentioned here is the ordinary Merge mode (or traditional Merge mode). For example, the ordinary Merge mode may mean that the encoded image block (such as a square image block) is no longer divided into sub-image-blocks, and the motion information is selected from the motion information candidate list for the encoded image block. It can be understood that in some other embodiments the second motion information candidate list may not be the motion information candidate list in the ordinary Merge mode, but, for example, a motion information candidate list in the AMVP mode. The embodiment where the second motion information candidate list is the motion information candidate list in the normal Merge mode will be used as an example to illustrate the present disclosure, for description purposes only.

Optionally, in the embodiments of the present disclosure, the aforementioned motion information that can be added may include at least one of the following: motion information of neighboring blocks in the spatial domain, motion information of neighboring blocks in the time domain, motion information of the neighboring paired average blocks, history based motion vector prediction (HMVP), or zero motion vector.

Specifically, the motion information that can be added may include not only the motion information of the neighboring blocks in the spatial domain and the motion information of the neighboring blocks in the time domain, but also other types of motion information. For example, it may include all of the above motion information. There are many types of motion information, which can improve the performance of encoding and decoding. In the candidate list b mentioned above, only the motion information of the neighboring blocks in the spatial domain and the motion information of the neighboring blocks in the time domain are included. There are fewer types of motion information, which is not conducive to the performance of coding and decoding.

Optionally, in one embodiment of the present disclosure, the motion information that can be added mentioned in the embodiments may be: the motion information that can be selected as the first motion information candidate list or the second motion information candidate list.

For some first image blocks, there may be no neighboring blocks in spatial domain (or neighboring blocks in time domain), or their neighboring blocks in spatial domain have not been coded or decoded. But this situation only represents that for the current first image block, the first motion information candidate list may not have the motion information of the neighboring blocks in spatial domain, and the motion information of the neighboring blocks in spatial domain can still be understood as the motion information that can be added.

Optionally, in one embodiment of the present disclosure, the order in which the same type of motion information that can be added are added to all types of motion information may refer to the priority ranking of the type of motion information in all types of motion information.

Optionally, in one embodiment of the present disclosure, the order in which the same type of internal motion information is added to the type of motion information may refer to: for the type of motion information, the priority of the included motion information in the type of motion information.

For example, for the motion information of the neighboring blocks in the spatial domain, the priority order from high to low can be: the motion information of the image block on the left, the motion information of the image block on the upside, the motion information of the image block in the upper right corner, the motion information of the image block in the lower left corner, and the motion information of the image block in the upper left corner.

Optionally, the same determination method of the same type of motion information that can be added may mean that at least one of the following aspects is the same: determining the position of the neighboring blocks used in the type of motion information relative to the first image block, or the selection methods of at least two pieces of motion information required to generate the motion information.

For example, as shown in FIG. 6, when constructing the first motion information candidate list and the second motion information candidate list, the neighboring blocks in the spatial domain include an image block A0 at the lower left corner of the current image block, an image block A1 on the left, an image block B2 at the upper left corner, an image block B1 at the upper side, an image block B0 at the upper right corner is B0. The neighboring blocks in the time domain include image blocks C1 and C2.

For example, when generating a paired average MV, the selected MVs can be the same. For example, the category to which the MVs belongs (for example, MVs that are all adjacent blocks in the spatial domain) and the way of determining the MV may be the same (for example, the positions of adjacent blocks of the MV relative to the first image block are the same).

Optionally, in one embodiment of the present disclosure, the first motion information candidate list and the second motion information candidate list may be constructed in the same manner. Specifically, the same construction method may include all the same aspects as described below: the types of the motion information that can be added are same, the same types of motion information that can be added have the same order of addition in all types of motion information, and the same type of motion information that can be added have the same order of addition in this type of motion information is the same, and the determination manner of the same types of motion information that can be added are same.

It should be understood that, in addition to the above same aspects, the same construction methods may also be the same in other aspects. The same construction methods mentioned here may be completely the same. Alternatively, some of the above aspects may be the same. Taking the second motion information candidate list as the motion information candidate list in the normal Merge mode as an example, the construction method of the first motion information candidate list may partially or completely refer to the construction method of the motion information candidate list in the ordinary Merge mode.

For example, the first motion information candidate list and the second motion information candidate list may both include the various types of motion information mentioned in (1)-(4) below, and the order of the various types of motion information may be in accordance with (1)-(4) from high to low.
(1) Motion information of neighboring blocks in spatial domain. For the first motion information candidate list and the second motion information candidate list, the spatial position of the neighboring blocks relative to the current image block may be the same, and the order of addition of the MV of each neighboring block in the motion information candidate list may be the same.
(2) Motion information of neighboring blocks in the time domain. For the first motion information candidate list and the second motion information candidate list, the temporal positions of the neighboring blocks relative to the current image block may be the same, and the order of addition of the MV of each neighboring block in the motion information candidate list may be the same.
(3) History based motion vector prediction (HMVP), where, for the first motion information candidate list and the second motion information candidate list, the steps for selecting HMVP may be exactly the same.
(4) Paired average motion information, where, for the first motion information candidate list and the second motion information candidate list, the types of adjacent blocks corresponding to the two basic MVs selected to generate the average motion information may be the same, and the positional relationship between the neighboring blocks and the current image block is the same.
(5) Zero motion vector.

For ease of understanding, the embodiment where the motion information candidate list is an MVP candidate list will be used as an example to illustrate the present disclosure. The construction of the MVP candidate list mentioned below is the construction of the first motion information candidate list and the second motion information candidate list.

The composition of the MVP candidate list may include at least part of the following (1) to (5).

Specifically, the candidate MVs in spatial domain in (1) can be used to construct the MVP candidate list. When the number of candidate MVPs included in the formed MVP candidate list at this time does not reach the preset number, the candidate MVs in time domain in (2) can be added into the MVP candidate list including the candidate MVs in the spatial domain. When the number of candidate MVP candidates included in the MVP candidate list does not reach the preset number at this time, the paired average candidate MV in (3) may be added to the MVP candidate list including the candidate MV in the space domain and the candidate MV in the time domain. When the number of candidate MVPs included in the formed MVP candidate list does not reach the preset number, the HMVP in (4) may be continuously added to the MVP candidate list including the candidate MV in the space domain, the candidate MV in the time domain, and the paired average candidate MV. When the number of candidate MVPs included in the formed MVP candidate list at this time does not reach the preset number, the zero motion vector in (5) may be continuously added to the MVP candidate list including the candidate MV in the space domain, the candidate MV in the time domain, the paired average candidate MV, and HMVP, until the number of candidate MVPs in the formed MVP candidate list reaches the preset value.

When part of candidates of one of the following items are added to the MVP candidate list, if the number of candidate MVP candidates included in the list has reached the preset number, adding remaining candidates of the item to the MVP candidate list can be stopped.

Items forming the MVP candidate list will be described below.

### (1) Candidate MV in spatial domain

Specifically, the MVs of image blocks adjacent to the current image block in spatial domain may be used as candidate MVP that can be added to the MVP candidate list.

For example, as shown in FIG. 6, assuming that the image block in the lower left corner of the current image block is A0, the image block on the left is A1, the image block in the upper left corner is B2, the upper image block is B1, and the upper right corner is B0, the order of candidate MVPs is A1->B1->B0->A0->B2 from high to low in priority.

### (2) Candidate MV in time domain

Specifically, the MVs of image blocks adjacent to the current image block in the time domain may be used as candidate MVP that can be added to the MVP candidate list.

Different from the candidate MV in spatial domain, the candidate MV in time domain may not directly use the motion information of the candidate block, and may be adjusted according to the temporal position relationship between the current frame and the reference frame.

### (3) Paired average candidate MV

According to the current candidate MVPs that have formed the MVP candidate list, the paired average candidate MV may be derived by averaging the predefined pairings.

The predefined pairing method and sequence can be: (0, 1), (0, 2), (1, 2), (0, 3), (1, 3), (2, 3), where 0, 1, 2, and 3 respectively represent the 1, 2, 3, and 4 candidate MVP candidates in the HMVP candidate list, and each bracket represents the MVP candidates within it for averaging.

### (4) HMVP

The MV of the encoded image block can be used to construct the HMVP candidate list, and the candidate HMVP in the HMVP candidate list can be selected as the candidate MVP added to the MVP candidate list.

### (5) Zero motion vector

After adding each item of (1)-(4) to the MVP candidate list, if the number of the MVP candidates in the MVP candidate list still does not reach the preset value, zero motion vectors may be used to fill in until the number of MVP candidates in the MVP candidate list reaches the preset value.

Of course, the above content only partially explains the construction of the second motion information candidate list as the motion information candidate list in the ordinary Merge mode, and the construction of the first motion information candidate list can also refer to the motion information candidate list in the ordinary Merge mode.

It should be understood that the motion information list introduced above is only a specific implementation manner of the present disclosure, and does not limit the scope of the present disclosure.

In the present disclosure, the first motion information candidate list and the second motion information candidate list may include one or more of the following same aspects: the types of motion information that can be added are the same, the motion information that can be added with a same type has the same order of addition in all types of motion information, the motion information that can be added with a same type has the same order of addition in this type of motion information, or the same type of motion information that can be added is determined in the same manner. The hardware used to construct the first motion information candidate list can be at least partially compatible with the hardware used to construct the second motion information candidate list, such that the hardware structure can be simplified.

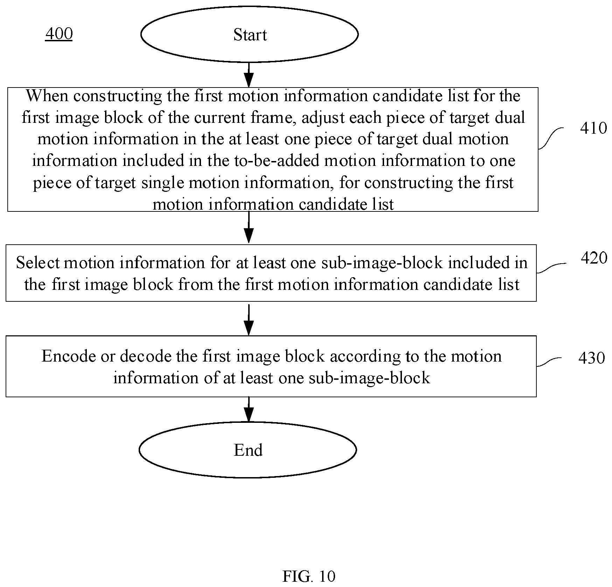

FIG. 10 is a schematic flow chart of a video processing method 400 consistent with an embodiment of the present disclosure. The method 400 may be executed by a processing device. The processing device may be an encoding end or a decoding end, specifically, may be an encoder or a decoder. The method 400 may include at least part of the following.

In 410, when constructing the first motion information candidate list for the first image block of the current frame, each piece of target dual motion-information in the at least one piece of target dual motion-information included in the to-be-added motion information is adjusted to one piece of target single motion-information for constructing the first motion information candidate list.

In 420, the motion information for each of the at least one sub-image-block included in the first image block is selected from the first motion information candidate list.

In 430, the first image block is encoded or decoded based on the motion information of each of the at least one sub-image-block.

It should be understood that the implementation of each step in the method 400 can refer to the above description. For brevity, it will not be repeated here. The target dual motion-information may correspond to the second dual motion-information mentioned above, and the target single motion-information may correspond to the second single motion-information mentioned above.

In the present disclosure, when constructing the motion information candidate list, if the motion information added to the motion information candidate list is the dual motion-information, the dual motion-information can be adjusted to one piece of single motion-information, which can reduce the number of first motion information. The probability of selecting dual motion-information for the sub-image-blocks in the motion information candidate list may be reduced, to avoid the computational complexity problem caused by selecting dual motion-information from the motion information candidate list for encoding or decoding.

Optionally, in one embodiment, the to-be-added motion information may be determined according to the motion information of adjacent image blocks of the first image block.

Specifically, the to-be-added motion information can be directly determined according to the motion information of the adjacent image blocks of the first image block, instead of a method including constructing a list (for example, the candidate list a mentioned above), and then starting from the list, selecting the to-be-added motion information and adding it to the first motion information candidate list.

Therefore, when adding the to-be-added motion information to the motion information candidate list, the to-be-added motion information (which can be processed from dual motion-information to single motion-information) to the motion information candidate list directly, instead of using the above-mentioned method of constructing a candidate list (for example, candidate list a) first, and constructing another candidate list (for example, candidate list b) based on the previous candidate list. That is, only one list construction may be required, which can avoid traversing all candidate motion information and reorganizing the dual motion-information from dual motion-information to single motion-information (that is, one double MV becomes two single MV) to judge whether the reorganized motion information is duplicated and be added to another candidate list (where, two single motion-information of one piece of dual motion-information may be added to the other candidate list). The processing complexity can be avoided. At the same time, the construction of the first motion information candidate list can be made independent of the previously constructed candidate list, and the construction of the first motion information candidate list may be not limited by the length of the previously constructed candidate list, added motion information, and construction. Therefore, in the case of constructing the candidate list only once, it may be also conducive to the flexible construction of the first motion information candidate list.

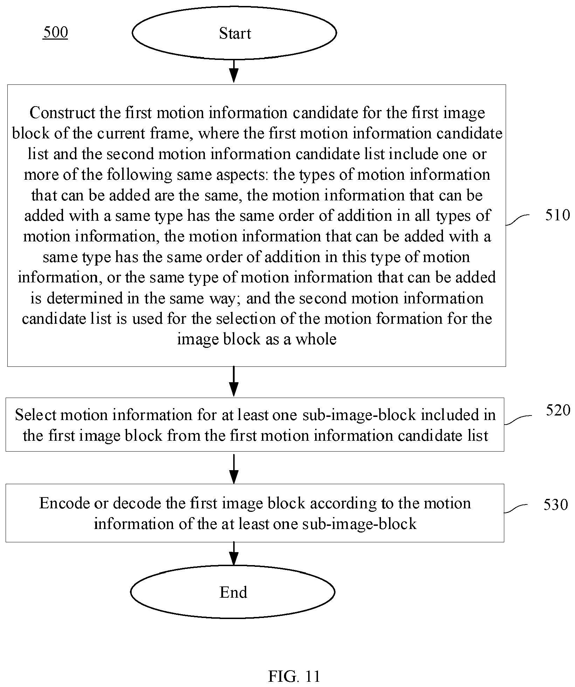

FIG. 11 is a schematic flow chart of a video processing method 500 consistent with an embodiment of the present disclosure. The method 500 may be executed by a processing device. The processing device may be an encoding end or a decoding end, specifically, may be an encoder or a decoder. The method 500 includes at least part of the following.

In 510, the first motion information candidate list is constructed for the first image block of the current frame. The first motion information candidate list and the second motion information candidate list may include one or more of the following same aspects: the types of motion information that can be added are the same, the motion information that can be added with a same type has the same order of addition in all types of motion information, the motion information that can be added with a same type has the same order of addition in this type of motion information, or the same type of motion information that can be added is determined in the same manner. The second motion information candidate list is used for the selection of the motion formation for the image block as a whole.

In 520, the motion information for each of the at least one sub-image-block included in the first image block is selected from the first motion information candidate list.

In 530, the first image block is encoded or decoded based on the motion information of each of the at least one sub-image-block.

It should be understood that the implementation of each step in the method 500 can refer to the above description. For brevity, it will not be repeated here.

In the present disclosure, the first motion information candidate list and the second motion information candidate list may include one or more of the following same aspects: the types of motion information that can be added are the same, the motion information that can be added with a same type has the same order of addition in all types of motion information, the motion information that can be added with a same type has the same order of addition in this type of motion information, or the same type of motion information that can be added is determined in the same manner. The hardware used to construct the first motion information candidate list can be at least partially compatible with the hardware used to construct the second motion information candidate list, such that the hardware structure can be simplified.

The present disclosure also provides a video processing device. In one embodiment shown in FIG. 9, the video processing device 600 may include:
a construction unit 610, configured to construct the first motion information candidate list for the first image block of the current frame,
a selection unit 620, configured to select the motion information for each of the at least one sub-image-block included in the first image block from the first motion information candidate list, where the first motion information candidate list includes at least one piece of dual motion-information, and
an encoding/decoding unit 630, configured to encode or decode the first image block based on the motion information for each of the at least one sub-image-block.

Optionally, in one embodiment, at least part of the motion vector values corresponding to the motion information in the first motion information candidate list may undergo precision conversion.

Optionally, in one embodiment, the device may further include:
a processing unit 640 configured to process the first dual motion-information according to a preset rule when the motion information corresponding to the selected sub-image-block is the first dual motion-information, such that it can be used for encoding or decoding the first image block.

Optionally, in one embodiment, the first dual motion-information may include first target dual motion-information and second target dual motion-information,

The preset rule for processing the first target dual motion-information may be: converting the precision of at least one motion vector value included in the first dual motion-information

The preset rule for processing the second target dual motion-information is: adjusting the first dual motion-information to one piece of first single motion-information as the motion information of the sub-image-block.

Optionally, in one embodiment, the processing unit 640may be further configured to:
convert the precision of at least one motion vector value included in the first dual motion-information.

Optionally, in one embodiment, the processing unit 640 may be further configured to:
convert the precision of at least one motion vector value included in the first dual motion-information to integer pixel precision.

Optionally, in one embodiment, the processing unit 640 may be further configured to:
adjust the first dual motion-information to one piece of first single motion-information as the motion information of the sub-image-block.

Optionally, in one embodiment, the processing unit 640 may be further configured to:
select one piece of motion information from the first dual motion-information as the first single motion-information.

Optionally, in one embodiment, the processing unit 640 may be further configured to:
according to a preset rule, select one piece of motion information from the first dual motion-information as the first single motion-information, where the preset rule may be used to instruct the selection of the single motion-information from the first dual motion-information to be set to a specific list. The specific list may be the second list or the first list.

Optionally, in one embodiment, the selection method for selecting the first single motion-information for the first dual motion-information may be updatable.

Optionally, in one embodiment, the encoding/decoding unit 630 may be further configured to:
write the first identifier of the first single motion-information into the code stream.

Optionally, in one embodiment, the device may be used at the decoding end, and the encoding/decoding unit 630 may be further configured to:
obtain the first identifier of the first single motion-information from the decoded code stream, to select the first single motion-information from the first dual motion-information.

Optionally, in one embodiment, the encoding/decoding unit 630 may be further configured to:
merge the first dual motion-information to obtain one piece of motion information as the first single motion-information.

Optionally, in one embodiment, the processing unit 640 may be further configured to:
before merging the first dual motion-information, scale one piece of motion information in the first dual motion-information based on another motion information in the first dual motion-information.

Optionally, in one embodiment of the present disclosure, the merging process may be a weighting process or an averaging process.

Optionally, in one embodiment of the present disclosure, the processing unit 640 may be further configured to:
determine a weight of each piece of motion information in the first dual motion-information, to perform the weighting process on the motion information in the first dual motion-information based on the weight.

The influencing factor of the weight of each piece of motion information in the first dual motion-information may include at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

Optionally, in one embodiment of the present disclosure, the processing unit 640 may be further configured to:
select the first adjustment method from a plurality of first methods for adjusting the first dual motion-information to the one piece of first single motion-information; and
based on the first adjustment method, adjust the first dual motion-information to the first single motion-information.

Optionally, in one embodiment, the selection of the first adjustment method among the plurality of first methods may be based on at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

In one embodiment, the plurality of first methods may include at least one of the following:
determining the motion information in the first dual motion-information belonging to the first list as the first single motion-information;
determining the motion information in the first dual motion-information belonging to the second list as the first single motion-information;
scaling the motion information in the first dual motion-information belonging to the first list based on the motion information belonging to the second list, and performing weighting process on the motion information belonging to the second list and the scaled motion information belonging to the first list, to obtain the first single motion-information;
scaling the motion information in the first dual motion-information belonging to the second list based on the motion information belonging to the first list, and performing weighting process on the motion information belonging to the first list and the scaled motion information belonging to the second list, to obtain the first single motion-information;
scaling the motion information in the first dual motion-information belonging to the first list based on the motion information belonging to the second list, and performing averaging process on the motion information belonging to the second list and the scaled motion information belonging to the first list, to obtain the first single motion-information;
scaling the motion information in the first dual motion-information belonging to the second list based on the motion information belonging to the first list, and performing averaging process on the motion information belonging to the first list and the scaled motion information belonging to the second list, to obtain the first single motion-information.

Optionally, in one embodiment, the device may further include:
a processing unit 640 configured to adjust each of the at least one second dual motion-information in the second dual motion-information to one piece of second single motion-information, for constructing the first motion information candidate list.

Optionally, in one embodiment, the processing unit 640may be further configured to:
select one piece of motion information from each of the at least one second dual motion-information as the second single motion-information.

Optionally, in one embodiment, the processing unit 640 may be further configured to:
according to a preset rule, select one piece of motion information from each of the at least one second dual motion-information as the second single motion-information, where the preset rule may be used to instruct the selection of the single motion-information from the second dual-motion information to be set to a specific list. The specific list may be the second list or the first list.

Optionally, in one embodiment, in the first motion information candidate list, the second single motion-information corresponding to the at least two second dual moton information may belong to different lists. The lists may be the second list or the first list.

Optionally, in one embodiment, the selection method for selecting the second single motion-information for the second dual motion-information may be updatable.

Optionally, in one embodiment, the device may be used at the encoding end or the decoding end. The encoding/decoding unit 630 may be further configured to:
write the second identifier of the second single motion-information into the code stream.

Optionally, in one embodiment, the device may be used at the decoding end, and the encoding/decoding unit 630 may be further configured to:
obtain the second identifier of the second single motion-information from the decoded code stream, to select the second single motion-information from the second dual motion-information.

Optionally, in one embodiment, the encoding/decoding unit 630 may be further configured to:
merge the second dual motion-information to obtain one piece of motion information as the second single motion-information.

Optionally, in one embodiment, the processing unit 640 may be further configured to:
before merging the second dual motion-information, scale one piece of motion information in the second dual motion-information based on another motion information in the second dual motion-information.

Optionally, in one embodiment of the present disclosure, the merging process may be a weighting process or an averaging processing.

Optionally, in one embodiment of the present disclosure, the processing unit 640 may be further configured to:
determine a weight of each piece of motion information in the second dual motion-information, to perform the weighting process on the motion information in the second dual motion-information based on the weight.

The influencing factor of the weight of each piece of motion information in the second dual motion-information may include at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

Optionally, in one embodiment of the present disclosure, the processing unit 640 may be further configured to:
select the second adjustment method from a plurality of second methods for adjusting the second dual motion-information to the one piece of second single motion-information; and
based on the second adjustment method, adjust the second dual motion-information to the second single motion-information.

Optionally, in one embodiment, the selection of the second adjustment method from the plurality of second methods may be based on at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

The plurality of second methods may include at least one of the following:
determining the motion information in the second dual motion-information belonging to the first list as the second single motion-information;
determining the motion information in the second dual motion-information belonging to the second list as the second single motion-information;
scaling the motion information in the second dual motion-information belonging to the first list based on the motion information belonging to the second list, and performing weighting process on the motion information belonging to the second list and the scaled motion information belonging to the first list, to obtain the second single motion-information;
scaling the motion information in the second dual motion-information belonging to the second list based on the motion information belonging to the first list, and performing weighting process on the motion information belonging to the first list and the scaled motion information belonging to the second list, to obtain the second single motion-information;
scaling the motion information in the second dual motion-information belonging to the second list based on the motion information belonging to the first list, and performing averaging process on the motion information belonging to the first list and the scaled motion information belonging to the second list, to obtain the second single motion-information;
scaling the motion information in the second dual motion-information belonging to the first list based on the motion information belonging to the second list, and performing averaging process on the motion information belonging to the second list and the scaled motion information belonging to the first list, to obtain the second single motion-information.

In one embodiment, the first motion information candidate list and the second motion information candidate list may include one or more of the following same aspects: the motion information that can be added have same type, the same type of motion information that can be added have same adding order in the all types of motion information, the motion information with the same type has same addition order in this type of motion information, or the same type of motion information that can be added are determined in the same manner.

The second motion information candidate list may be used for the selection of motion information of the image block as a whole.

Optionally, in one embodiment, the method for constructing the first motion information candidate list may be the same as the manner for constructing the second motion information candidate list.

Optionally, in one embodiment, the to-be-added motion information may include at least one of the following: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the priority of the addition order of the to-be-added motion information may be from high to low as follows: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the number of the sub-image-blocks may be two.

Optionally, in one embodiment, at least one of the sub-image-blocks may be obtained after the triangular division of the first image block.

It should be understood that the device 600 may be used to implement the corresponding operations implemented by the processing device in the above method 300, and for the sake of brevity, details are not described herein again.

FIG. 10 is a schematic block diagram of a video processing device 700 consistent with an embodiment of the present disclosure. The video processing device 700 includes:
a construction unit 710, configured to construct the first motion information candidate list for the first image block of the current frame,
an adjustment unit 720, configured to adjust each piece of target dual motion-information in the at least one piece of target dual motion-information in the to-be-added motion information to one piece of target single motion-information, when the construction unit constructs the first motion information candidate list,
a selection unit 730, configured to select the motion information for each of the at least one sub-image-block included in the first image block from the first motion information candidate list, and
an encoding/decoding unit 740, configured to encode or decode the first image block based on the motion information for each of the at least one sub-image-block.

Optionally, in one embodiment, the adjustment unit 720 may be further configured to select one piece of motion information from the target dual motion-information as the target single motion-information.

Optionally, in one embodiment, the adjustment unit 720 may be further configured to:
according to a preset rule, select one piece of motion information from each piece of target dual motion-information as the target single motion-information, where the preset rule may be used to instruct the selection of the single motion-information from the target dual motion-information to be set to a specific list. The specific list may be the second list or the first list.

Optionally, in one embodiment, in the first motion information candidate list, the target single motion-information corresponding to the at least two pieces of target dual motion-information may belong to different lists. The list may include the second list and the first list.

Optionally, in one embodiment, the selection method for selecting the target single motion-information for the target dual motion-information may be updatable.

Optionally, in one embodiment, the device may be used at the encoding end, and the encoding/decoding unit 740 may be further configured to:
write the identifier of the target single motion-information into the code stream.

Optionally, in one embodiment, the device may be used at the decoding end, and the encoding/decoding unit 740 may be further configured to:
obtain the identifier of the target single motion-information from the decoded code stream, to select the target single motion-information from the target dual motion-information.

Optionally, in one embodiment, the adjustment unit 720 may be further configured to:
merge the motion information in each of the target dual motion-information to obtain one piece of motion information as the target single motion-information.

Optionally, in one embodiment, the adjustment unit 720 may be further configured to:
before merging the motion information in each of the target dual motion-information, scale one piece of motion information in each of the target dual motion-information based on another motion information in the target dual motion-information.

Optionally, in one embodiment of the present disclosure, the merging process may be a weighting process or an averaging processing.

Optionally, in one embodiment of the present disclosure, the adjustment unit 720 may be further configured to:
determine a weight of each piece of motion information in each of the target dual motion-information, to perform the weighting process on the motion information in each of the target dual motion-information based on the weight.

The influencing factor of the weight of each piece of motion information in each of the target dual motion-information may include at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

Optionally, in one embodiment of the present disclosure, the adjustment unit 720 may be further configured to:
select the adjustment method from a plurality of methods for adjusting each of the target dual motion-information to the one piece of first single motion-information; and
based on the adjustment method, adjust each of the target dual motion-information to one piece of target single motion-information.

Optionally, in one embodiment, the selection of the adjustment method among the plurality of methods may be based on at least one of the following: the size of the first image block, the pixel value of the first image block, the pixel value of the adjacent area of the first image block, the size and/or number of pieces of motion information belonging to the first list among the motion information that have been added to the first motion information candidate list, or the size and/or number of pieces of motion information belonging to the second list among the motion information that have been added to the first motion information candidate list.

In one embodiment, the plurality of first methods may include at least one of the following:
determining the motion information in the target dual motion-information belonging to the first list as the target single motion-information;
determining the motion information in the target dual motion-information belonging to the second list as the target single motion-information;
scaling the motion information in the target dual motion-information belonging to the first list based on the motion information belonging to the second list, and performing weighting process on the motion information belonging to the second list and the scaled motion information belonging to the first list, to obtain the target single motion-information;
scaling the motion information in the target dual motion-information belonging to the second list based on the motion information belonging to the first list, and performing weighting process on the motion information belonging to the first list and the scaled motion information belonging to the second list, to obtain the target single motion-information;
scaling the motion information in the target dual motion-information belonging to the first list based on the motion information belonging to the second list, and performing the averaging process on the motion information belonging to the second list and the scaled motion information belonging to the first list, to obtain the target single motion-information;
scaling the motion information in the target dual motion-information belonging to the second list based on the motion information belonging to the first list, and performing the averaging process on the motion information belonging to the first list and the scaled motion information belonging to the second list, to obtain the target single motion-information.

In one embodiment, the first motion information candidate list and the second motion information candidate list may include one or more of the following same aspects: the motion information that can be added have same type, the same type of motion information that can be added have same adding order in the all types of motion information, the motion information with the same type has same addition order in this type of motion information, or the same type of motion information that can be added are determined in the same manner.

Optionally, in one embodiment, the to-be-added motion information may include at least one of the following: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the priority of the addition order of the to-be-added motion information may be from high to low as follows: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the number of the sub-image-blocks may be two.

Optionally, in one embodiment, the at least one sub-image-block may be obtained after the triangular division of the first image block.

It should be understood that the device 700 may be used to implement the corresponding operations implemented by the processing device in the above method 400, and for the sake of brevity, details are not described herein again.

FIG. 11 is a schematic block diagram of a video processing device 800 consistent with an embodiment of the disclosure. The video processing device 800 includes:
a construction unit 801, configured to construct the first motion information candidate list for the first image block of the current frame, where the first motion information candidate list and the second motion information candidate list may include one or more of the following same aspects: the motion information that can be added have same type, the same type of motion information that can be added have same adding order in the all types of motion information, the motion information with the same type has same addition order in this type of motion information, or the same type of motion information that can be added are determined in the same manner; and the second motion information candidate list may be used for selection of the motion information of the image block as a whole,
a selection unit 820, configured to select the motion information for each of the at least one sub-image-block included in the first image block from the first motion information candidate list, and
an encoding/decoding unit 830, configured to encode or decode the first image block based on the motion information for each of the at least one sub-image-block.

Optionally, in one embodiment, the construction method of the first motion information candidate list may be same as the construction method of the second motion information candidate list.

Optionally, in one embodiment, the to-be-added motion information may include at least one of the following: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the priority of the addition order of the to-be-added motion information may be from high to low as follows: the motion information of neighboring blocks in spatial domain, the motion information of neighboring blocks in time domain, the motion information of neighboring paired average blocks, the history based motion vector prediction (HMVP), or the zero motion vectors.

Optionally, in one embodiment, the number of the sub-image-blocks may be two.

Optionally, in one embodiment, the at least one sub-image-block may be obtained after the triangular division of the first image block.

It should be understood that the device 800 may be used to implement the corresponding operations implemented by the processing device in the above method 500, and for the sake of brevity, details are not described herein again.

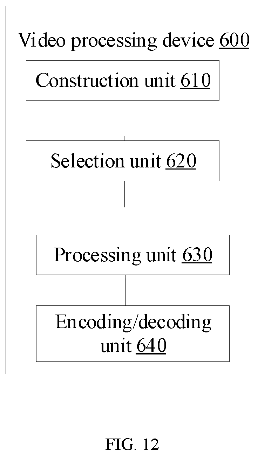

FIG. 12 is a schematic block diagram of a video processing device 900 consistent with an embodiment of the disclosure.

As shown in FIG. 12, the video processing device 900 includes a processor 910 and a memory 920.

In some embodiments, the video processing device 900 may further include components usually included in other video processing device, such as input/output devices, or communication interfaces. The present disclosure has no limit on this.

The memory 920 may be configured to store computer-executable instructions.

The memory 920 may be various types of memory. For example, the memory 920 may include a high-speed random access memory (RAM), a non-volatile memory such as at least one disk memory. The present disclosure has no limit on this.

The processor 910 may be configured to access the memory 920 and execute the computer-executable instructions to execute operations in the video processing methods provided by various embodiments of the present disclosure.

The processor 910 may include a microprocessor, a Field-Programmable Gate Array (FPGA), a central processing unit (CPU), a graphics processing unit (GPU), etc. The present disclosure has no limit on this.

The video processing device provided by various embodiments of the present disclosure may correspond to the execution object of the video processing methods provided by various embodiments of the present disclosure, and the above and other operations and/or functions of each module in the video processing device may be used to implement the corresponding procedures of the foregoing methods. For the sake of brevity, it will not be repeated here.

The present disclosure also provides an electronic device. The device may include any video processing device provided by various embodiments of the present disclosure.

The present disclosure also provides a computer storage medium. The medium may be configured to store program codes. The program codes may be executed to implement any video processing method provided by various embodiments of the present disclosure.

It should be understood that, in the present disclosure, the term "and/or" is merely an association relationship describing associated objects, which means that there may be three relationships. For example, A and/or B can mean: A alone exists, A and B exist at the same time, and B exists alone. In addition, the character "/" in this text generally indicates that the associated objects before and after are in an "or" relationship.

The units or algorithms in the above-mentioned embodiments may be implemented in whole or in part by computer software, electric hardware, or any other combination. To clearly illustrate the interchangeability of hardware and software, the composition and steps of each embodiment have been described generally in terms of function in the above description. Whether these functions are executed by hardware or software depends on the specific application and design constraint conditions of the technical solution. Professionals and technicians can use different methods for each specific application to implement the described functions, but such implementation should not be considered beyond the scope of the present disclosure.

Those skilled in the art can clearly understand that, for the convenience and conciseness of description, for the specific working process of the above-described system, device, and unit, the corresponding process in the foregoing method embodiments can be referred to, which will not be repeated here.

In the various embodiments provided in the present disclosure, it should be understood that the disclosed system, device, and method may be implemented in other ways. For example, the device embodiments described above are only illustrative. For example, the division of the units is only a logical function division, and there may be other divisions in actual implementation. For example, multiple units or components can be combined or may be integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units. That is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit. The above-mentioned integrated unit can be realized in the form of hardware or software functional unit.

When the integrated unit is implemented in the form of a software functional unit and sold or used as an independent product, it can be stored in a computer-readable storage medium. Based on this understanding, the technical solution of the present disclosure is essentially or the part that contributes to the existing technology, or all or part of the technical solution can be embodied in the form of a software product, and the computer software product is stored in a storage medium. It may include several instructions to enable a computer device (which may be a personal computer, a server, or a network device, etc.) to perform all or part of the steps of the methods described in the various embodiments of the present disclosure. The aforementioned storage media may include: flash disks, mobile hard disks, read-only memory (ROM), random access memory (RAM), magnetic disks, optical disks, or other media that can store program codes.

The above are only specific implementations of embodiments of the present disclosure, but the scope of protection of the present disclosure is not limited to this. Anyone familiar with the technical field can easily think of various equivalent modifications or replacements within the technical scope disclosed in the present disclosure. These modifications or replacements shall be covered within the scope of protection of the present disclosure. Therefore, the protection scope of the present disclosure shall be subject to the protection scope of the claims.

## Claims

1. A video processing method, comprising:
constructing a first motion information candidate list for a first image block of a current frame;
selecting motion information for at least one sub-image-block included in the first image block from the first motion information candidate list respectively, wherein the first motion information candidate list includes at least one piece of dual motion-information; and
encoding or decoding the first image block according to the motion information of the at least one sub-image-block.

2. The method according to claim 1, wherein:
motion vector values corresponding to at least part of motion information included in the first motion information candidate list undergo precision conversion.

3. The method according to claim 1, further comprising:
when the selected motion information corresponding to one sub-image-block of the at least one sub-image-block is first dual motion-information, processing the first dual motion-information according to a preset rule, for encoding or decoding the first image block.

4. The method according to claim 3, wherein:
when the first dual motion-information is first target dual motion-information, the preset rule for processing the first dual motion-information includes: converting precision of at least one motion vector values included in the first dual motion-information; and
when the first dual motion-information is second target dual motion-information different from the first target dual motion-information, the preset rule for processing the first dual motion-information includes: adjusting the first dual motion-information to one piece of first single motion-information as the motion information of the corresponding image block.

5. The method according to claim 3, wherein processing the first dual motion-information according to the preset rule includes :
converting precision of at least one motion vector values included in the first dual motion-information.

6. The method according to claim 5, wherein converting the precision of the at least one motion vector values included in the first dual motion-information includes:
converting the precision of the at least one motion vector values included in the first dual motion-information to integer pixel precision.

7. The method according to claim 3, 5, or 6, wherein processing the first dual motion-information according to the preset rule includes:
adjusting the first dual motion-information to one piece of first single motion-information as the motion information of the corresponding image block.

8. The method according to claim 7, wherein adjusting the first dual motion-information to one piece of first single motion-information includes:
selecting one piece of motion information from the first dual motion-information as the first single motion-information.

9. The method according to claim 8, wherein selecting one piece of motion information from the first dual motion-information as the first single motion-information includes:
according to a preset rule, selecting one piece of motion information from the first dual motion-information as the first single motion-information, wherein the preset rule is used to instruct selection of single motion-information preset in a specific list from the first dual motion-information, and the specific list includes a second list or a first list.

10. The method according to claim 8, wherein a selection method for selecting the first single motion-information from the first dual motion-information is updatable.

11. The method according to any of claims 8 to 10, wherein:
the method is applied to an encoding end, and further includes writing a first identifier of the first single motion-information into an encoding code stream.

12. The method according to any of claims 8 to 10, wherein:
the method is applied to a decoding end, and further includes obtaining a first identifier of the first single motion-information from an encoding code stream for selecting the first single motion-information from the first dual motion-information.

13. The method according to claim 7, wherein adjusting the first dual motion-information to one piece of first single motion-information includes:
performing a merging process on the first dual motion-information to obtain one piece of single motion-information as the first single motion-information.

14. The method according to claim 13, wherein adjusting the first dual motion-information to one piece of first single motion-information further includes:
before performing the merging process on the first dual motion-information, scaling one piece of motion information in the first dual motion-information according to another motion information in the first dual motion-information.

15. The method according to claim 13 or 14, wherein the merging process is a weighting process or an averaging process.

16. The method according to claim 15, further comprising:
determining the weight of each piece of motion information in the first dual motion-information, to perform the weighting process on the motion information in the first dual motion-information based on the weight, wherein:
influence factors of the weight of each piece of motion information in the first dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

17. The method according to any of claims 7 to 16, wherein adjusting the first dual motion-information to one piece of first single motion-information includes:
selecting a first adjustment method from a plurality of first methods for adjusting the first dual motion-information to one piece of first single motion-information; and
adjusting the first dual motion-information to one piece of first single motion-information based on the first adjustment method.

18. The method according to claim 17, wherein selecting the first adjustment method from the plurality of first methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

19. The method according to claim 17 or 18, wherein the plurality of first methods includes part or all of:
determining the motion information in the first dual motion-information belonging to the first list as the first single motion-information;
determining the motion information in the first dual motion-information belonging to the second list as the first single motion-information;
scaling the motion information in the first dual motion-information belonging to the first list based on the motion information belonging to the second list, and performing weighting process on the motion information belonging to the second list and the scaled motion information belonging to the first list, to obtain the first single motion-information;
scaling the motion information in the first dual motion-information belonging to the second list based on the motion information belonging to the first list, and performing weighting process on the motion information belonging to the first list and the scaled motion information belonging to the second list, to obtain the first single motion-information;
scaling the motion information in the first dual motion-information belonging to the first list based on the motion information belonging to the second list, and performing an averaging process on the motion information belonging to the second list and the scaled motion information belonging to the first list, to obtain the first single motion-information; and
scaling the motion information in the first dual motion-information belonging to the second list based on the motion information belonging to the first list, and performing an averaging process on the motion information belonging to the first list and the scaled motion information belonging to the second list, to obtain the first single motion-information.

20. The method according to any of claims 1 to 19, further comprising:
when constructing the first motion information candidate list, adjusting each second dual motion-information in at least one second dual to-be-added motion information to one piece of second single motion-information for constructing the first motion information candidate list.

21. The method according to claim 20, wherein adjusting each second dual motion-information in the at least one second dual to-be-added motion information to one piece of second single motion-information includes:
selecting one piece of motion information from each second dual motion-information as the second single motion-information.

22. The method according to claim 21, wherein selecting one piece of motion information from each second dual motion-information as the second single motion-information includes:
according to a preset rule, selecting one piece of motion information from each second dual motion-information as the second single motion-information, wherein the preset rule is used to instruct selection of single motion-information preset in a specific list from the second dual motion-information, and the specific list includes a second list or a first list.

23. The method according to claim 21, wherein in the first motion information candidate list, the second single motion-information corresponding to at least two second dual motion-information belong to different lists, wherein the lists include the second list and the first list.

24. The method according to claim 21, wherein a selection method for selecting the first single motion-information from the first dual motion-information is updatable.

25. The method according to any of claims 21 to 24, wherein:
the method is applied to an encoding end, and further includes writing a second identifier of the second single motion-information into an encoding code stream.

26. The method according to any of claims 21 to 24, wherein:
the method is applied to a decoding end, and further includes obtaining a second identifier of the second single motion-information from an encoding code stream for selecting the second single motion-information from the second dual motion-information.

27. The method according to claim 20, wherein adjusting each second dual motion-information in at least one second dual to-be-added motion information to one piece of second single motion-information includes:
performing a merging process on each second dual motion-information to obtain one piece of single motion-information as the second single motion-information.

28. The method according to claim 27, wherein adjusting each second dual motion-information in at least one second dual to-be-added motion information to one piece of second single motion-information further includes:
before performing the merging process on each second dual motion-information to obtain one piece of single motion-information as the second single motion-information, scaling one piece of motion information in the second dual motion-information according to another motion information in the second dual motion-information.

29. The method according to claim 27 or 28, wherein the merging process is a weighting process or an averaging process.

30. The method according to claim 29, further comprising:
determining the weight of each piece of motion information in each second dual motion-information, to perform the weighting process on the motion information in each second dual motion-information based on the weight, wherein:
influence factors of the weight of each piece of motion information in each second dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

31. The method according to any of claims 20 to 30, wherein adjusting each second dual motion-information in at least one second dual to-be-added motion information to one piece of second single motion-information includes:
selecting a second adjustment method from a plurality of second methods for adjusting each second dual motion-information in at least one second dual to-be-added motion information to one piece of second single motion-information; and
adjusting each second dual motion-information in at least one second dual to-be-added motion information to one piece of second single motion-information based on the second adjustment method.

32. The method according to claim 31, wherein selecting the second adjustment method from the plurality of second methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

33. The method according to claim 31 or 32, wherein the plurality of second methods includes part or all of:
determining the motion information in the second dual motion-information belonging to the first list as the first single motion-information;
determining the motion information in the second dual motion-information belonging to the second list as the first single motion-information;
scaling the motion information in the second dual motion-information belonging to the first list based on the motion information belonging to the second list, and performing weighting process on the motion information belonging to the second list and the scaled motion information belonging to the first list, to obtain the second single motion-information;
scaling the motion information in the second dual motion-information belonging to the second list based on the motion information belonging to the first list, and performing weighting process on the motion information belonging to the first list and the scaled motion information belonging to the second list, to obtain the second single motion-information;
scaling the motion information in the second dual motion-information belonging to the first list based on the motion information belonging to the second list, and performing an averaging process on the motion information belonging to the second list and the scaled motion information belonging to the first list, to obtain the second single motion-information; and
scaling the motion information in the second dual motion-information belonging to the second list based on the motion information belonging to the first list, and performing an averaging process on the motion information belonging to the first list and the scaled motion information belonging to the second list, to obtain the second single motion-information.

34. The method according to any of claims 1 to 33, wherein the first motion information candidate list and a second motion information candidate list include one or more of following same aspects :
the motion information that can be added have same type, the same type of motion information that can be added have same adding order in all types of motion information, the motion information with the same type has same addition order in this type of motion information, or the same types of motion information that can be added are determined in the same manner.

35. The method according to claim 34, wherein a method for constructing the first motion information candidate list is same as a method for constructing the second motion information candidate list.

36. The method according to any of claims 1 to 35, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

37. The method according to any of claims 1 to 36, wherein the priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

38. The method according to any of claims 1 to 37, wherein a number of the at least one sub-image-block is two.

39. The method according to any of claims 1 to 38, wherein the at least one sub-image-block is obtained by performing triangular division on the first image block.

40. A video processing method, comprising:
when constructing a first motion information candidate list for a first image block of a current frame, adjusting each piece of target dual motion-information in at least one piece of target dual motion-information included in to-be-added motion information to one piece of target single motion-information for constructing the first motion information candidate list;
selecting motion information for at least one sub-image-block included in the first image block from the first motion information candidate list respectively; and
encoding or decoding the first image block according to the motion information of the at least one sub-image-block.

41. The method according to claim 40, wherein:
the to-be-added motion information is determined according to motion information of image blocks adjacent to the first image block.

42. The method according to any of claim 40 to 41, wherein adjusting each piece of target dual motion-information in the at least one piece of target dual motion-information included in the to-be-added motion information to one piece of target single motion-information includes:
selecting one piece of motion information from each piece of target dual motion-information as the target single motion-information.

43. The method according to claim 42, wherein selecting one piece of motion information from each piece of target dual motion-information as the target single motion-information includes:
according to a preset rule, selecting one piece of motion information from each piece of target dual motion-information as the second single motion-information, wherein the preset rule is used to instruct selection of single motion-information preset in a specific list from the target dual motion-information, and the specific list includes a second list or a first list.

44. The method according to claim 42, wherein in the first motion information candidate list, the target single motion-information corresponding to at least two pieces of target dual motion-information belong to different lists, wherein the lists include the second list and the first list.

45. The method according to claim 42, wherein a selection method for selecting the target single motion-information from the target dual motion-information is updatable.

46. The method according to any of claims 42 to 45, wherein:
the method is applied to an encoding end, and further includes writing an identifier of the target single motion-information into an encoding code stream.

47. The method according to any of claims 42 to 45, wherein:
the method is applied to a decoding end, and further includes obtaining an identifier of the target single motion-information from an encoding code stream for selecting the target single motion-information from the target dual motion-information.

48. The method according to claim 40, wherein adjusting each piece of target dual motion-information in at least one piece of target dual motion-information included in the to-be-added motion information to one piece of target single motion-information includes:
performing a merging process on each piece of target dual motion-information to obtain one piece of single motion-information as the target single motion-information.

49. The method according to claim 48, wherein adjusting each piece of target dual motion-information in at least one piece of target dual motion-information included in the to-be-added motion information to one piece of target single motion-information further includes:
before performing the merging process on the target dual motion-information to obtain one piece of single motion-information as the target single motion-information, scaling one piece of motion information in the target dual motion-information according to another motion information in the target dual motion-information.

50. The method according to claim 48 or 49, wherein the merging process is a weighting process or an averaging process.

51. The method according to claim 50, further comprising:
determining the weight of each piece of motion information in each piece of target dual motion-information, to perform the weighting process on the motion information in target second dual motion-information based on the weight, wherein:
influence factors of the weight of each piece of motion information in the target dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

52. The method according to any of claims 40 to 51, wherein adjusting each piece of target dual motion-information in at least one piece of target dual motion-information in the to-be-added motion information to one piece of target single motion-information includes:
selecting an adjustment method from a plurality of methods for adjusting each piece of target dual motion-information in at least one piece of target dual motion-information in the to-be-added motion information to one piece of target single motion-information; and
adjusting each piece of target dual motion-information in at least one piece of target dual motion-information in the to-be-added motion information to one piece of target single motion-information based on the adjustment method.

53. The method according to claim 52, wherein selecting the adjustment method from the plurality of methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

54. The method according to claim 52 or 53, wherein the plurality of methods includes part or all of:
determining the motion information in the target dual motion-information belonging to the first list as the target single motion-information;
determining the motion information in the target dual motion-information belonging to the second list as the target single motion-information;
scaling the motion information in the target dual motion-information belonging to the first list based on the motion information belonging to the second list, and performing weighting process on the motion information belonging to the second list and the scaled motion information belonging to the first list, to obtain the target single motion-information;
scaling the motion information in the target dual motion-information belonging to the second list based on the motion information belonging to the first list, and performing weighting process on the motion information belonging to the first list and the scaled motion information belonging to the second list, to obtain the target single motion-information;
scaling the motion information in the target dual motion-information belonging to the first list based on the motion information belonging to the second list, and performing an averaging process on the motion information belonging to the second list and the scaled motion information belonging to the first list, to obtain the target single motion-information; and
scaling the motion information in the target dual motion-information belonging to the second list based on the motion information belonging to the first list, and performing an averaging process on the motion information belonging to the first list and the scaled motion information belonging to the second list, to obtain the target single motion-information.

55. The method according to any of claims 40 to 54, wherein the first motion information candidate list and a second motion information candidate list include one or more of the following same aspects :
the motion information that can be added have same type, the same type of motion information that can be added have same adding order in the all types of motion information, the motion information with the same type has same addition order in this type of motion information, or the same types of motion information that can be added are determined in the same manner, wherein the second motion information candidate list is used for the selection of the motion information for the image block as a whole.

56. The method according to any of claims 40 to 55, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

57. The method according to any of claims 40 to 56, wherein priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

58. The method according to any of claims 40 to 57, wherein a number of the at least one sub-image-block is two.

59. The method according to any of claims 40 to 58, wherein the at least one sub-image-block is obtained by performing triangular division on the first image block.

60. A video processing method, comprising:
constructing a first motion information candidate list for a first image block of a current frame, wherein the first motion information candidate list and a second motion information candidate list include one or more of following same aspects: the motion information that can be added have same type, the same type of motion information that can be added have same adding order in the all types of motion information, the motion information with the same type has same addition order in this type of motion information, or the same types of motion information that can be added are determined in the same manner;
selecting motion information for at least one sub-image-block included in the first image block from the first motion information candidate list respectively; and
encoding or decoding the first image block according to the motion information of the at least one sub-image-block.

61. The method according to claim 60, wherein a method for constructing the first motion information candidate list is same as a method for constructing the second motion information candidate list.

62. The method according to claim 60 or 61, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

63. The method according to claim 62, wherein the priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

64. The method according to any of claims 60 to 63, wherein a number of the at least one sub-image-block is two.

65. The method according to any of claims 60 to 64, wherein the at least one sub-image-block is obtained by performing triangular division on the first image block.

66. A video processing device, comprising:
a construction unit, configured to construct a first motion information candidate list for a first image block of a current frame;
a selection unit, configured to select motion information for each of the at least one sub-image-block included in the first image block from the first motion information candidate list, wherein the first motion information candidate list includes at least one piece of dual motion-information; and
an encoding/decoding unit, configured to encode or decode the first image block based on the motion information for each of the at least one sub-image-block.

67. The device according to claim 66, wherein:
motion vector values corresponding to at least part of motion information included in the first motion information candidate list undergo precision conversion.

68. The device according to claim 66, further comprising:
a processing unit, configured to: when the selected motion information corresponding to the sub-image-block is first dual motion-information, process the first dual motion-information according to a preset rule, for encoding or decoding the first image block.

69. The device according to claim 68, wherein:
the first dual motion-information includes first target dual motion-information and second target dual motion-information;
the preset rule for processing the first target dual motion-information includes: converting precision of at least one motion vector values included in the first dual motion-information; and
the preset rule for processing the second target dual motion-information includes:
adjusting the first dual motion-information to one piece of first single motion-information as the motion information of the corresponding image block.

70. The device according to claim 68, wherein the processing unit is further configured to:
convert precision of at least one motion vector values included in the first dual motion-information.

71. The device according to claim 60, wherein the processing unit is further configured to:
convert the precision of the at least one motion vector values included in the first dual motion-information to integer pixel precision.

72. The device according to claim 68, 70, or 71, wherein the processing unit is further configured to:
adjust the first dual motion-information to one piece of first single motion-information as the motion information of the corresponding image block.

73. The device according to claim 72, wherein the processing unit is further configured to:
select one piece of motion information from the first dual motion-information as the first single motion-information.

74. The device according to claim 73, wherein the processing unit is further configured to:
according to a preset rule, select one piece of motion information from the first dual motion-information as the first single motion-information, wherein the preset rule is used to instruct selection of single motion-information preset in a specific list from the first dual motion-information, and the specific list includes a second list or a first list.

75. The device according to claim 73, wherein a selection method for selecting the first single motion-information from the first dual motion-information is updatable.

76. The device according to any of claims 73 to 75, wherein the encoding/decoding unit is further configured to:
write a first identifier of the first single motion-information into an encoding code stream.

77. The device according to any of claims 73 to 75, wherein the encoding/decoding unit is further configured to:
obtain a first identifier of the first single motion-information from an encoding code stream for selecting the first single motion-information from the first dual motion-information.

78. The device according to claim 72, wherein the encoding/decoding unit is further configured to:
perform a merging process on the first dual motion-information to obtain one piece of single motion-information as the first single motion-information.

79. The device according to claim 78, wherein the processing unit is further configured to:
before performing the merging process on the first dual motion-information, scale one piece of motion information in the first dual motion-information according to another motion information in the first dual motion-information.

80. The device according to claim 78 79, wherein the merging process is a weighting process or an averaging process.

81. The device according to claim 80, wherein the processing unit is further configured to:
determine the weight of each piece of motion information in the first dual motion-information, to perform the weighting process on the motion information in the first dual motion-information based on the weight, wherein:
influence factors of the weight of each piece of motion information in the first dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

82. The device according to any of claims 65 to 81, wherein the processing unit is further configured to:
select a first adjustment method from a plurality of first methods for adjusting the first dual motion-information to one piece of first single motion-information; and
adjust the first dual motion-information to one piece of first single motion-information based on the first adjustment method.

83. The device according to claim 82, wherein selecting the first adjustment method from the plurality of first methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

84. The device according to claim 82 or 83, wherein the plurality of first methods includes part or all of:
determining the motion information in the first dual motion-information belonging to the first list as the first single motion-information;
determining the motion information in the first dual motion-information belonging to the second list as the first single motion-information;
scaling the motion information in the first dual motion-information belonging to the first list based on the motion information belonging to the second list, and performing weighting process on the motion information belonging to the second list and the scaled motion information belonging to the first list, to obtain the first single motion-information;
scaling the motion information in the first dual motion-information belonging to the second list based on the motion information belonging to the first list, and performing weighting process on the motion information belonging to the first list and the scaled motion information belonging to the second list, to obtain the first single motion-information;
scaling the motion information in the first dual motion-information belonging to the first list based on the motion information belonging to the second list, and performing an averaging process on the motion information belonging to the second list and the scaled motion information belonging to the first list, to obtain the first single motion-information; and
scaling the motion information in the first dual motion-information belonging to the second list based on the motion information belonging to the first list, and performing an averaging process on the motion information belonging to the first list and the scaled motion information belonging to the second list, to obtain the first single motion-information.

85. The device according to any of claims 66 to 84, wherein the processing unit is further configured to:
when constructing the first motion information candidate list, adjust each second dual motion-information in at least one second dual to-be-added motion information to one piece of second single motion-information for constructing the first motion information candidate list.

86. The device according to claim 85, wherein the processing unit is further configured to:
select one piece of motion information from each second dual motion-information as the second single motion-information.

87. The device according to claim 86, wherein the processing unit is further configured to:
according to a preset rule, select one piece of motion information from each second dual motion-information as the second single motion-information, wherein the preset rule is used to instruct selection of single motion-information preset in a specific list from the second dual motion-information, and the specific list includes a second list or a first list.

88. The device according to claims 86, wherein in the first motion information candidate list, the second single motion-information corresponding to at least two second dual motion-information belong to different lists, wherein the lists include the second list and the first list.

89. The device according to claims 86, wherein a selection method for selecting the first single motion-information from the first dual motion-information is updatable.

90. The device according to any of claims 86 to 89, wherein:
the device is applied to an encoding end or a decoding end, and the encoding/decoding end is further configured to write a second identifier of the second single motion-information into an encoding code stream.

91. The device according to any of claims 86 to 89, wherein:
the device is applied to a decoding end, and the encoding/decoding end is further configured to obtain a second identifier of the second single motion-information from an encoding code stream for selecting the second single motion-information from the second dual motion-information.

92. The device according to claim 86, wherein the processing unit is further configured to:
perform a merging process on each second dual motion-information to obtain one piece of single motion-information as the second single motion-information.

93. The device according to claim 92, wherein the processing unit is further configured to:
before performing the merging process on each second dual motion-information to obtain one piece of single motion-information as the second single motion-information, scale one piece of motion information in the second dual motion-information according to another motion information in the second dual motion-information.

94. The device according to claim 92 or 93, wherein the merging process is a weighting process or an averaging process.

95. The device according to claim 94, wherein the processing unit is further configured to:
determine the weight of each piece of motion information in each second dual motion-information, to perform the weighting process on the motion information in each second dual motion-information based on the weight, wherein:
influence factors of the weight of each piece of motion information in each second dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

96. The device according to any of claims 85 to 95, wherein the processing unit is further configured to:
select a second adjustment method from a plurality of second methods for adjusting each second dual motion-information in at least one second dual to-be-added motion information to one piece of second single motion-information; and
adjust each second dual motion-information in at least one second dual to-be-added motion information to one piece of second single motion-information based on the second adjustment method.

97. The device according to claim 96, wherein selecting the second adjustment method from the plurality of second methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

98. The device according to claim 96 or 97, wherein the plurality of second methods includes part or all of:
determining the motion information in the second dual motion-information belonging to the first list as the first single motion-information;
determining the motion information in the second dual motion-information belonging to the second list as the first single motion-information;
scaling the motion information in the second dual motion-information belonging to the first list based on the motion information belonging to the second list, and performing weighting process on the motion information belonging to the second list and the scaled motion information belonging to the first list, to obtain the second single motion-information;
scaling the motion information in the second dual motion-information belonging to the second list based on the motion information belonging to the first list, and performing weighting process on the motion information belonging to the first list and the scaled motion information belonging to the second list, to obtain the second single motion-information;
scaling the motion information in the second dual motion-information belonging to the first list based on the motion information belonging to the second list, and performing an averaging process on the motion information belonging to the second list and the scaled motion information belonging to the first list, to obtain the second single motion-information; and
scaling the motion information in the second dual motion-information belonging to the second list based on the motion information belonging to the first list, and performing an averaging process on the motion information belonging to the first list and the scaled motion information belonging to the second list, to obtain the second single motion-information.

99. The device according to any of claims 66 to 98, wherein the first motion information candidate list and a second motion information candidate list include one or more of following same aspects :
the motion information that can be added have same type, the same type of motion information that can be added have same adding order in the all types of motion information, the motion information with the same type has same addition order in this type of motion information, or the same type of motion information that can be added are determined in the same manner.

100. The device according to claim 99, wherein a method for constructing the first motion information candidate list is same as a method for constructing the second motion information candidate list.

101. The device according to any of claims 66 to 100, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

102. The device according to any of claims 66 to 101, wherein priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

103. The device according to any of claims 66 to 102, wherein a number of the at least one sub-image-block is two.

104. The device according to any of claims 66 to 103, wherein the at least one sub-image-block is obtained by performing triangular division on the first image block.

105. A video processing device, comprising:
a construction unit, configured to construct a first motion information candidate list for a first image block of a current frame;
an adjustment unit, configured to: when constructing a first motion information candidate list for a first image block of a current frame, adjust each piece of target dual motion-information in at least one piece of target dual motion-information included in to-be-added motion information to one piece of target single motion-information for constructing the first motion information candidate list;
a selection unit, configured to select motion information for each of the at least one sub-image-block included in the first image block from the first motion information candidate list, wherein the first motion information candidate list includes at least one piece of dual motion-information; and
an encoding/decoding unit, configured to encode or decode the first image block based on the motion information for each of the at least one sub-image-block.

106. The device according to claim 105, wherein:
the to-be-added motion information is determined according to motion information of image blocks adjacent to the first image block.

107. The device according to claim 105 or 106, wherein the adjustment unit is further configured to:
select one piece of motion information from each piece of target dual motion-information as the target single motion-information.

108. The device according to claim 107, wherein the adjustment unit is further configured to:
accord to a preset rule, selecting one piece of motion information from each piece of target dual motion-information as the second single motion-information, wherein the preset rule is used to instruct selection of single motion-information preset in a specific list from the target dual motion-information, and the specific list includes a second list or a first list.

109. The device according to claim 107, wherein in the first motion information candidate list, the target single motion-information corresponding to at least two pieces of target dual motion-information belong to different lists, wherein the lists include the second list and the first list.

110. The device according to claim 107, wherein a selection method for selecting the target single motion-information from the target dual motion-information is updatable.

111. The device according to any of claims 107 to 110, wherein:
the device is applied to an encoding end, and the encoding/decoding unit is further configured to write an identifier of the target single motion-information into an encoding code stream.

112. The device according to any of claims 42 to 45, wherein:
the device is applied to a decoding end, and the encoding/decoding unit is further configured to obtain an identifier of the target single motion-information from an encoding code stream for selecting the target single motion-information from the target dual motion-information.

113. The device according to claim 105, wherein the adjustment unit is further configured to:
perform a merging process on each piece of target dual motion-information to obtain one piece of single motion-information as the target single motion-information.

114. The device according to claim 113, wherein the adjustment unit is further configured to:
before performing the merging process on the target dual motion-information to obtain one piece of single motion-information as the target single motion-information, scale one piece of motion information in the target dual motion-information according to another motion information in the target dual motion-information.

115. The device according to claim 113 or 114, wherein the merging process is a weighting process or an averaging process.

116. The device according to claim 115, wherein the adjustment unit is further configured to:
determine the weight of each piece of motion information in each piece of target dual motion-information, to perform the weighting process on the motion information in target second dual motion-information based on the weight, wherein:
influence factors of the weight of each piece of motion information in the target dual motion-information include at least one of the following: a size of the first image block, a pixel value of the first image block, a pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

117. The device according to any of claims 105 to 116, wherein the adjustment unit is further configured to:
select an adjustment method from a plurality of methods for adjusting each piece of target dual motion-information in at least one piece of target dual motion-information in the to-be-added motion information to one piece of target single motion-information; and
adjust each piece of target dual motion-information in at least one piece of target dual motion-information in the to-be-added motion information to one piece of target single motion-information based on the adjustment method.

118. The device according to claim 117, wherein selecting the adjustment method from the plurality of methods is based on at least one of the following:
the size of the first image block, the pixel value of the first image block, the pixel value of an adjacent area of the first image block, the size and/or quantity of the motion information belonging to the first list in the added motion information of the first motion information candidate list, or the size and/or quantity of the motion information belonging to the second list in the added motion information of the first motion information candidate list.

119. The device according to claim 117 or 118, wherein the plurality of methods includes part or all of:
determining the motion information in the target dual motion-information belonging to the first list as the target single motion-information;
determining the motion information in the target dual motion-information belonging to the second list as the target single motion-information;
scaling the motion information in the target dual motion-information belonging to the first list based on the motion information belonging to the second list, and performing weighting process on the motion information belonging to the second list and the scaled motion information belonging to the first list, to obtain the target single motion-information;
scaling the motion information in the target dual motion-information belonging to the second list based on the motion information belonging to the first list, and performing weighting process on the motion information belonging to the first list and the scaled motion information belonging to the second list, to obtain the target single motion-information;
scaling the motion information in the target dual motion-information belonging to the first list based on the motion information belonging to the second list, and performing an averaging process on the motion information belonging to the second list and the scaled motion information belonging to the first list, to obtain the target single motion-information; and
scaling the motion information in the target dual motion-information belonging to the second list based on the motion information belonging to the first list, and performing an averaging process on the motion information belonging to the first list and the scaled motion information belonging to the second list, to obtain the target single motion-information.

120. The device according to any of claims 105 to 119, wherein the first motion information candidate list and a second motion information candidate list include one or more of following same aspects :
the motion information that can be added have same type, the same type of motion information that can be added have same adding order in the all types of motion information, the motion information with the same type has same addition order in this type of motion information, or the same type of motion information that can be added are determined in the same manner, wherein the second motion information candidate list is used for selection of the motion information for the image block as a whole.

121. The device according to any of claims 105 to 120, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

122. The device according to any of claims 105 to 121, wherein priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

123. The device according to any of claims 105 to 122, wherein a number of the at least one sub-image-block is two.

124. The device according to any of claims 105 to 123, wherein the at least one sub-image-block is obtained by performing triangular division on the first image block.

125. A video processing device, comprising:
a construction unit, configured to construct a first motion information candidate list for a first image block of a current frame, wherein the first motion information candidate list and a second motion information candidate list include one or more of following same aspects: the motion information that can be added have same type, the same type of motion information that can be added have same adding order in the all types of motion information, the motion information with the same type has same addition order in this type of motion information, or the same type of motion information that can be added are determined in the same manner, wherein the second motion information candidate list is used for selection of the motion information for the image block as a whole;
a selection unit, configured to select motion information for each of the at least one sub-image-block included in the first image block from the first motion information candidate list, wherein the first motion information candidate list includes at least one piece of dual motion-information; and
an encoding/decoding unit, configured to encode or decode the first image block based on the motion information for each of the at least one sub-image-block.

126. The device according to claim 125, wherein a method for constructing the first motion information candidate list is same as a method for constructing the second motion information candidate list.

127. The device according to claim 125 or 126, wherein the to-be-added motion information includes at least one of the following:
motion information of neighboring blocks in the spatial domain, motion information of neighboring blocks in the time domain, motion information of the neighboring paired average blocks, history based motion vector prediction (HMVP), or zero motion vectors.

128. The device according to any of claims 125 to 127, wherein priority of the addition order of the to-be-added motion information from high to low is:
the motion information of neighboring blocks in the spatial domain, the motion information of neighboring blocks in the time domain, the motion information of the neighboring paired average blocks, the history based motion vector prediction (HMVP), or the zero motion vectors.

129. The device according to any of claims 125 to 128, wherein a number of the at least one sub-image-block is two.

130. The device according to any of claims 125 to 129, wherein the at least one sub-image-block is obtained by performing triangular division on the first image block.

131. A video processing device, comprising a processor and a memory, wherein:
the memory is configured to store program codes; and
the processor is configured to call the program codes to execute a video processing method according to any of claims 1 to 65.

132. A computer-readable storage medium, configured to store program codes,
wherein
the program codes are configured to execute a video processing method according to any of claims 1 to 65.
